# NEUE EUROPÄISCHE PATENTSCHRIFT

(11) **EP 1 220 999 B2**
(45) Veröffentlichungstag und Bekanntmachung des Hinweises auf die Entscheidung über den Einspruch: **22.12.2010**
(45) Hinweis auf die Patenterteilung: 09.04.2003
(21) Anmeldenummer: 00975863.2
(22) Anmeldetag: 11.10.2000
(51) Int. Cl.: F16H 3/66

(54) **MEHRSTUFENGETRIEBE**
MULTI-STEP GEAR
BOITE DE VITESSES MULTI-ETAGEE

(30) Priorität: 14.10.1999 DE 19949507
(43) Veröffentlichungstag der Anmeldung: 10.07.2002
(73) Patentinhaber: ZF FRIEDRICHSHAFEN Aktiengesellschaft, 88038 Friedrichshafen (DE)
(72) Erfinder: ZIEMER, Peter, 88069 Tettnang (DE)
(86) Internationale Anmeldenummer: PCT/EP2000/009993
(87) Internationale Veröffentlichungsnummer: WO 2001/027496

(56) Entgegenhaltungen:
- EP-A- 0 433 619
- EP-A- 0 434 525
- EP-A- 0 997 663
- GB-A- 2 103 736
- JP-A- 429 650
- JP-A- 526 310
- JP-A- 4 290 649
- JP-A- 6 200 998
- US-A- 4 683 776
- US-A- 4 976 670
- US-A- 5 133 697
- US-A- 5 370 589
- US-A- 5 429 557
- US-A- 5 520 588

## Beschreibung

Die vorliegende Erfindung betrifft ein Mehrstufengetriebe nach dem Oberbegriff des Patentanspruchs 1.

Ein derartiges Getriebe geht aus der EP gattungsgemäßen 0 434 525 A1 hervor. Es umfaßt im wesentlichen eine Antriebswelle und eine Abtriebswelle, die koaxial zueinander angeordnet sind, einen konzentrisch zur Abtriebswelle angeordneten Doppelplanetenradsatz und fünf Schaltelemente in der Form von drei Kupplungen und zwei Bremsen, deren wahlweise Sperrung jeweils paarweise die verschiedenen Gangübersetzungen zwischen der Antriebswelle und der Abtriebswelle bestimmen.

Das bekannte Getriebe weist zwei Leistungswege auf, wobei ein erstes Element des Doppelplanetenradsatzes durch eine erste Kupplung mit dem ersten Leistungsweg verbunden ist, ein zweites Element des Doppelplanetenradsatzes mit der Abtriebswelle fest verbunden ist, ein drittes Element mit dem zweiten Leistungsweg über eine dritte Kupplung verbunden ist und durch eine erste Bremse gesperrt wird und ein viertes Element des Doppelplanetenradsatzes mit dem ersten Leistungsweg über eine zweite Kupplung verbunden ist und durch eine zweite Bremse gebremst wird, sodass eine wahlweise Schaltung paarweise zwischen den Schaltorganen so gewährleistet ist, dass sechs Vorwärtsgänge entstehen. Dabei wird ein erster Gang durch die erste Kupplung und die erste Bremse, ein zweiter Gang durch die erste Kupplung und die zweite Bremse, ein dritter Gang durch die erste Kupplung und die zweite Kupplung, ein vierter Gang durch die erste Kupplung und die dritte Kupplung, ein fünfter Gang durch die zweite Kupplung und die dritte Kupplung und ein sechster durch die dritte Kupplung und die zweite Bremse geschaltet. Schließlich wird ein Rückwärtsgang durch die zweite Kupplung und die erste Bremse geschaltet.

Die Aufgabe der vorliegenden Erfindung besteht nun darin, ein Mehrstufengetriebe zu schaffen, das wenigstens sieben Vorwärtsgänge mit einer günstigen Gangstufung und großer Spreizung umfaßt und vergleichsweise kostengünstig herstellbar ist.

Diese Aufgabe wird durch ein Mehrstufengetriebe in einer ersten Lösung mit den Merkmalen des Patentanspruchs 1, in einer zweiten Lösung mit dem Merkmalen des Patentanspruchs 13 und in einer dritten Lösung mit den Merkmalen des Patentanspruchs 17 gelöst.

Ein wesentlicher Vorteil besteht darin, daß das erfindungsgemäße Mehrstufengetriebe bei einer geringen Anzahl von Radsätzen und Schaltelementen mindestens sieben Vorwärtsgänge aufweist. Dabei sind in jedem geschalteten Gang jeweils nur zwei Schaltelemente geschaltet. Beim Umschalten von einem Gang in den nächsten wird lediglich ein Schaltelement abgeschaltet und ein weiteres Schaltelement zugeschaltet. Auf diese Weise können schaltqualitätskritische Gruppenschaltungen, bei denen mehrere Schaltelemente gleichzeitig geschaltet werden müssen, vermieden werden.

Aus den Unteransprüchen gehen bevorzugte Ausgestaltungen der Erfindung hervor, die kostengünstig herstellbare Mehrstufengetriebe betreffen, bei denen mit einer möglichst kleinen Anzahl von Schaltelementen und Radsätzen möglichst viele Gänge schaltbar sind.

Im folgenden werden die Erfindung und deren Ausgestaltungen im Zusammenhang mit den Figuren näher erläutert. Es zeigen:
Figuren 1A und 1B eine erste Ausführungsform eines Mehrstufengetriebe mit sieben Vorwärtsgängen und einem Rückwärtsgang;
Figuren 2A und 2B eine zweite Ausführungsform eines Mehrstufengetriebe mit sieben Vorwärtsgängen und einem Rückwärtsgang;
Figuren 3A und 3B eine dritte Ausführungsform eines Mehrstufengetriebes mit sieben Vorwärtsgängen und einem Rückwärtsgang;
Figuren 4A und 4B eine vierte Ausführungsform eines Mehrstufengetriebes mit sieben Vorwärtsgängen und einem Rückwärtsgang;
Figuren 5A und 5B eine fünfte Ausführungsform eines Mehrstufengetriebes mit sieben Vorwärtsgängen und einem Rückwärtsgang;
Figuren 6A und 6B eine sechste Ausführungsform eines erfindungsgemäßen Mehrstufengetriebes mit zehn Vorwärtsgängen und einem Rückwärtsgang;
Figuren 7A und 7B eine siebte Ausführungsform eines erfindungsgemäßen Mehrstufengetriebes mit neun Vorwärtsgängen und zwei Rückwärtsgängen;
Figuren 8A und 8B eine achte Ausführungsform des erfindungsgemäßen Mehrstufengetriebes mit neun Vorwärtsgängen und einem Rückwärtsgang;
Figuren 9A und 9B eine neunte Ausführungsform mit acht Vorwärtsgängen und zwei Rückwärtsgängen, die nicht zur Erfindung gehört.
Figuren 10A und 10B eine zehnte Ausführungsform eines erfindungsgemäßen Mehrstufengetriebes mit dreizehn Vorwärtsgängen und einem Rückwärtsgang;
Figuren 11A und 11B eine elfte Ausführungsform des erfindungsgemäßen Mehrstufengetriebes mit sechzehn Vorwärtsgängen und einem Rückwärtsgang;
Figuren 12A und 12B eine zwölfte Ausführungsform mit acht Vorwärtsgängen und ohne Rückwärtsgang, die nicht zur Erfindung gehört;
Figuren 13A und 13B eine dreizehnte Ausführungsform mit acht Vorwärtsgängen, ohne Rückwärtsgang, die nicht zur Erfindung gehört;
Figuren 14A und 14B eine vierzehnte Ausführungsform mit acht Vorwärtsgängen, ohne Rückwärtsgang, die nicht zur Erfindung gehört;
Figuren 15A und 15B eine fünfzehnte Ausführungsform des erfindungsgemäßen Mehrstufengetriebes mit elf Vorwärtsgängen, ohne Rückwärtsgang und
Figuren 16A und 16B eine sechzehnte Ausführungsform des erfindungsgemäßen Mehrstufengetriebes mit siebzehn Vorwärtsgängen, ohne Rückwärtsgang.

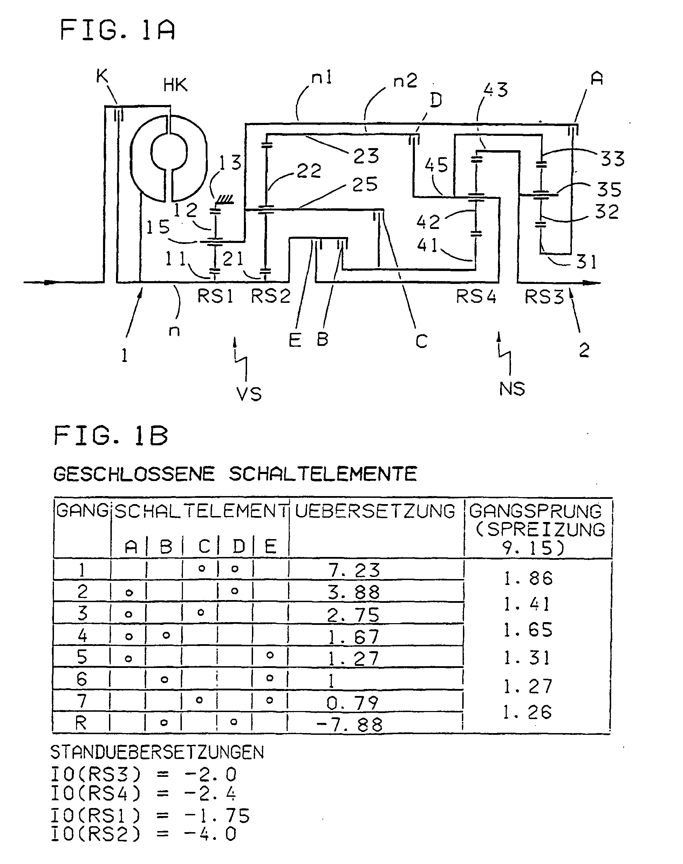

In den Figuren sind entsprechend der jeweiligen Ausführungsform des erfindungsgemäßen Mehrstufengetriebes das Kraftflußschema (Figuren 1A bis 16A) sowie die Schaltlogik mit den zugehörigen Übersetzungen der einzelnen Gänge, die Gangstufung, die Getriebespreizung und die Standübersetzungen der einzelnen Planetenradsätze (Figuren 1B bis 16B) dargestellt. Aus den Standübersetzungen ist für den Fachmann mittels Kutzbachplan ersichtlich, daß Gruppenschaltungen bei allen dargestellten Ausführungsformen vermieden werden.

Zu der Erfindung führten die folgenden Überlegungen. Um mit fünf Schaltelementen ein gegenüber dem Stand der Technik vergleichsweise kostengünstig herstellbares Mehrstufengetriebe mit sieben Vorwärtsgängen und einem Rückwärtsgang zu schaffen, werden an der Antriebswelle zwei Vorschaltradsätze vorgesehen, die zusätzlich zu der über die Antriebswelle eingeleitete Eingangsdrehzahl n zwei weitere Drehzahlen n1 und n2 erzeugen. Im Gegensatz dazu ist bei dem eingangs beschriebenen bekannten Mehrstufengetriebe nur ein Vorschaltradsatz an der Antriebswelle vorgesehen, der zusätzlich zur Eingangsdrehzahl n eine weitere Drehzahl erzeugt. Durch Betätigen der Schaltelemente werden bei der vorliegenden Erfindung die Drehzahlen n1, n2 und die Eingangsdrehzahl n entsprechend dem geschalteten Kraftfluß auf die Abtriebswelle übertragen. Durch die Anordnung zusätzlicher Schaltelemente lassen sich, ausgehend von dem erfindungsgemäßen Mehrstufengetriebe mit sieben Vorwärtsgängen und einem Rückwärtsgang, verschiedene Mehrstufengetriebe mit mehr als sieben Vorwärtsgängen und mindestens einem Rückwärtsgang, insbesondere für Personenkraftwagen, Busse und Lastkraftwagen, konzipieren. Für Offroad-Fahrzeuge kann ein Kriechgangkonzept mit spezieller Gangabstufung dargestellt werden. Für den Einsatz in Motorrädern und Fahrrädern können Vielganggetriebe ohne Rückwärtsgang dargestellt werden.

Im folgenden werden im Zusammenhang mit den Figuren 1 bis 5 fünf verschiedene Varianten des vorliegenden Mehrstufengetriebe mit sieben Vorwärtsgängen und einem Rückwärtsgang erläutert, die durch fünf Schaltelemente schaltbar sind. Da mit den erfindungsgemäßen Getriebekonzepten eine Spreizung von 9 und größer möglich ist, kann der im Vergleich zum eingangs beschriebenen Sechsgang-Getriebe erzielte Spreizungsgewinn beispielsweise auch zur Substitution eines üblicherweise als Anfahrelement verwendeten Drehmomentwandlers durch eine einfache hydraulische Kupplung genutzt werden, ohne dabei auf eine hohe Anfahrleistung des Fahrzeugs zu verzichten.

In den Figuren 1 bis 5 sind jeweils die Antriebswelle mit 1, die Schaltelemente mit A, B, C, D und E, der erste Planetenradsatz des Vorschaltradsatzes VS mit RS1, der zweite Planetenradsatz des Vorschaltradsatzes VS mit RS2 sowie der erste und zweite Radsatz des schaltbaren Nachschaltradsatzes NS mit RS3 bzw. RS4 bezeichnet.

Allen fünf Ausführungsformen der Figuren 1 bis 5 ist gemeinsam, dass der Vorschaltradsatz RS1 neben der Eingangsdrehzahl n der Antriebswelle 1 eine erste zusätzliche Drehzahl n1 und der zweite Radschaltsatz RS2 eine zweite zusätzliche Drehzahl n2 erzeugen. In jedem geschalteten Gang sind jeweils nur zwei Schaltelemente geschlossen.

Die Vorschaltradsätze bilden ein nicht schaltbares Zweisteg-Vierwellen-Getriebe, wobei mindestens eine Welle und maximal eine Welle je Vorschaltradsatz mit der Drehzahl n der Antriebswelle 1 läuft und mindestens eine Welle und maximal eine Welle je Vorschaltradsatz festgesetzt ist.

Der Radsatz RS1 weist ein Sonnenrad 11, Planetenräder 12 und ein Hohlrad 13 auf. Der Radsatz RS2 besitzt ein Sonnenrad 21, Planetenräder 22 und ein Hohlrad 23. Der den Planetenrädern 12 gemeinsame Steg ist mit 15 bezeichnet, während der den Planetenrädern 22 zugeordnete Steg mit 25 bezeichnet ist.

Bei dem schaltbaren Nachschaltgetriebe NS handelt es sich um ein schaltbares Zweisteg-Vierwellen-Getriebe, das die Radsätze RS3 und RS4 umfaßt. Der Radsatz RS3 weist ein Sonnenrad 31, Planetenräder 32 und ein Hohlrad 33 auf. Entsprechend umfaßt der Radsatz RS4 des Nachschaltgetriebes NS ein Sonnenrad 41, Planetenräder 42 und ein Hohlrad 43. Der den Planetenrädern 32 gemeinsame Steg ist mit 35 bezeichnet, während der den Planetenrädern 42 gemeinsame Steg mit 45 bezeichnet ist. Der Steg 45 des Radsatzes RS4 ist mit einer Welle des Radsatzes RS3 verbunden. An diese Koppelwelle sind die Schaltelemente E und D angeschlossen.

An einem Zentralrad des Radsatzes RS4 sind die Schaltelemente B und C angeschlossen, wobei unter Zentralrad entweder ein Sonnenrad oder ein Hohlrad des Radsatzes zu verstehen ist. An einem Zentralrad des Radsatzes RS3 ist das Schaltelement A angeschlossen.

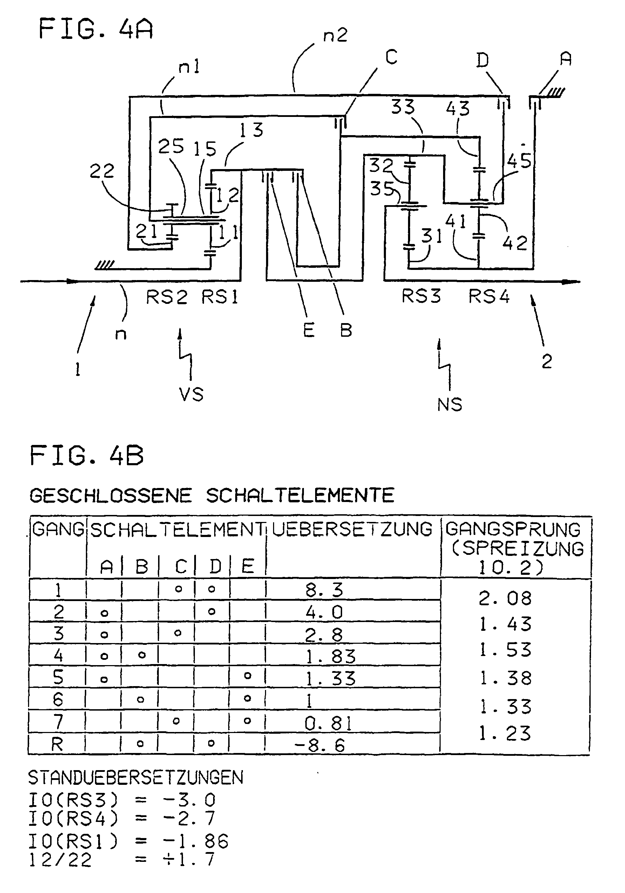

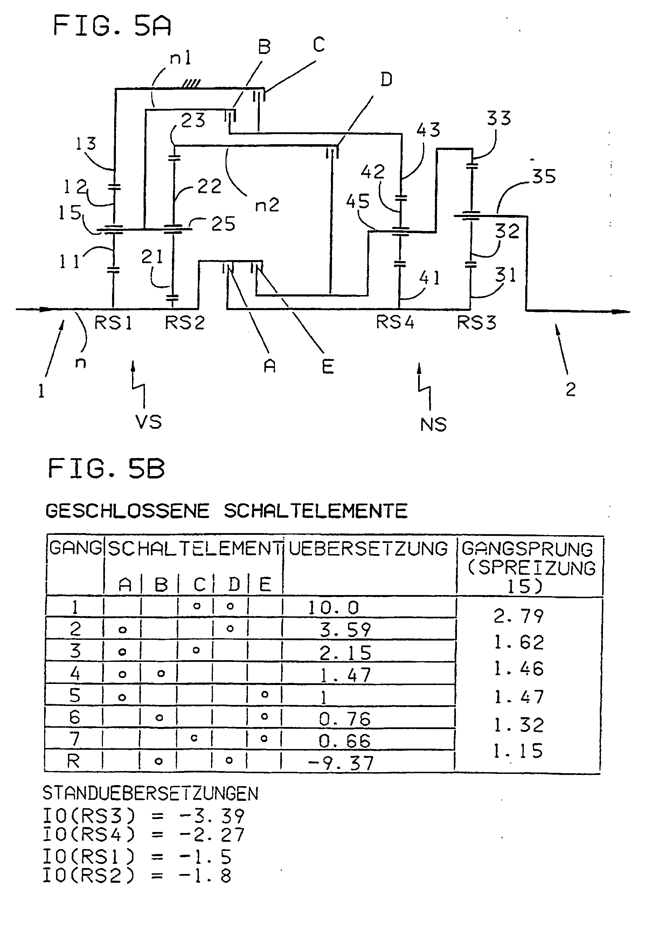

Entweder bildet die mit dem Schaltelement A verbundene Welle mit dem Zentralrad des Radsatzes RS4, welches nicht mit den Schaltelementen B und C verbunden ist, die zweite Koppelwelle (Fig. 4A, Fig. 5A), oder die zweite Koppelwelle ist mit der Abtriebswelle 2 verbunden (Fig. 1A, Fig. 2A, Fig. 3A).

Für die Drehzahlen an den Wellen und Schaltelementen gilt folgendes:
1. Die Drehzahl an der Antriebswelle und am Schaltelement E ist n = 1 (als normierte Größe);
2. die Drehzahl am Schaltelement D ist größer / gleich 0;
3. die Drehzahl am Schaltelement D ist kleiner / gleich als die Drehzahl an dem Schaltelement B;
4. die Drehzahl am Schaltelement C ist kleiner als die Drehzahl an dem Schaltelement B;
5. die Drehzahl am Schaltelement B ist kleiner / gleich 1;
6. die Drehzahl am Schaltelement A liegt im Bereich 0 bis 1;
7. maximal zwei in den Nachschaltradsatz NS führende Wellen haben dieselbe Drehzahl;
8. die über die Schaltelemente A und D auf den Radsatz RS3 eingeleiteten Drehzahlen in Verbindung mit der Übersetzung des Radsatzes RS3 erzeugen eine Abtriebsdrehzahl, welche größer ist als die Abtriebsdrehzahl, die durch die über die Schaltelemente C und D auf den Radsatz RS4 eingeleiteten Drehzahlen in Verbindung mit der Übersetzung des Radsatzes RS4 und im Fall, daß die mit dem Schaltelement A verbundene Welle eine Koppelwelle mit einem Zentralrad des Radsatzes RS4 des schaltbaren Nachschaltradsatz NS bildet, zusätzlich mit der Übersetzung des Radsatzes RS3, erzeugt wird.

Figur 1A zeigt eine erste Ausführungsform des erfindungsgemäßen Mehrstufengetriebes mit zwei gekoppelten, nicht schaltbaren Vorschaltradsätzen. Hierbei ist die Antriebswelle 1 mit den Sonnenrädern 11 und 21 der Vorschaltradsätze RS1 und RS2 verbunden. Das Hohlrad 13 des ersten Vorschaltradsatzes RS1 ist festgesetzt. Die Stege 15 und 25 der beiden Vorschaltradsätze RS1 und RS2 sind miteinander verbunden. Das Hohlrad 23 (Drehzahl n2) des zweiten Vorschaltradsatzes RS2 ist über die Kupplung D mit dem Hohlrad 33 des ersten Nachschaltradsatzes RS3 und dem Steg 45 des zweiten Nachschaltradsatzes RS4 verbindbar. Weiterhin sind die Stege 15 und 25 (Drehzahl n1) über die Kupplung A mit dem Sonnenrad 31 des ersten Nachschaltradsatzes RS3, sowie über die Kupplung C mit dem Sonnenrad 41 des zweiten Nachschaltradsatzes RS4 verbindbar. Die Antriebswelle 1 ist über die Kupplung B mit dem Sonnenrad 41 und über die Kupplung E mit dem Steg 45 verbindbar. Im Nachschaltgetriebe NS ist der Steg 35 des Radsatzes RS3 mit dem Hohlrad 43 des Radsatzes RS4 und mit der Abtriebswelle 2 verbunden. Außerdem ist das Hohlrad 33 des Rad-satzes RS3 mit dem Steg 45 des Radsatzes RS4 verbunden.

Durch die Ansteuerung des Nachschaltradsatzes NS bzw. der Radsätze RS3 und RS4 desselben mit den Drehzahlen n, n1 und n2 durch selektives Schalten der fünf Schaltelemente A bis E können gemäß der Schaltskizze der Figur 1b die Vorwärtsgänge 1 bis 7 und der Rückwärtsgang R geschaltet werden. Dabei ist es ein wesentlicher Vorteil, dass beim Umschalten von einem Gang in den nächsten Gang lediglich ein Schaltelement ab- und ein Schaltelement zugeschaltet werden muß. Auf diese Weise können schaltqualitätskritische Schaltungen mit einer gleichzeitigen Zuschaltung von mehreren Schaltelementen (Gruppenschaltung) vermieden werden.

Vorteilhaft bei der Ausführungsform 1 des erfindungsgemäßen Mehrstufengetriebes ist insbesondere die große Spreizung (größer 9), bei ähnlich günstiger Gangabstufung wie das eingangs als Stand der Technik beschriebene 6-Gang-Automatgetriebe. Somit kann im Anwendungsbeispiel PKW beispielsweise der üblicherweise eingesetzten Drehmomentwandler als Anfahrelement durch eine hydraulische Kupplung und / oder eine im Getriebe integrierte Lamellenkupplung ersetzt werden, ohne dabei auf eine hohe Anfahrleistung zu verzichten. Eine mögliche Ausgestaltung ist in der Figur 1A beispielhaft dargestellt. Hieraus ergeben sich die Vorteile geringeres Gewicht, günstige Einbauabmessungen für den Fahrzeugtunnelbereich mit reduzierter Baulänge, sowie verringerte Kosten.

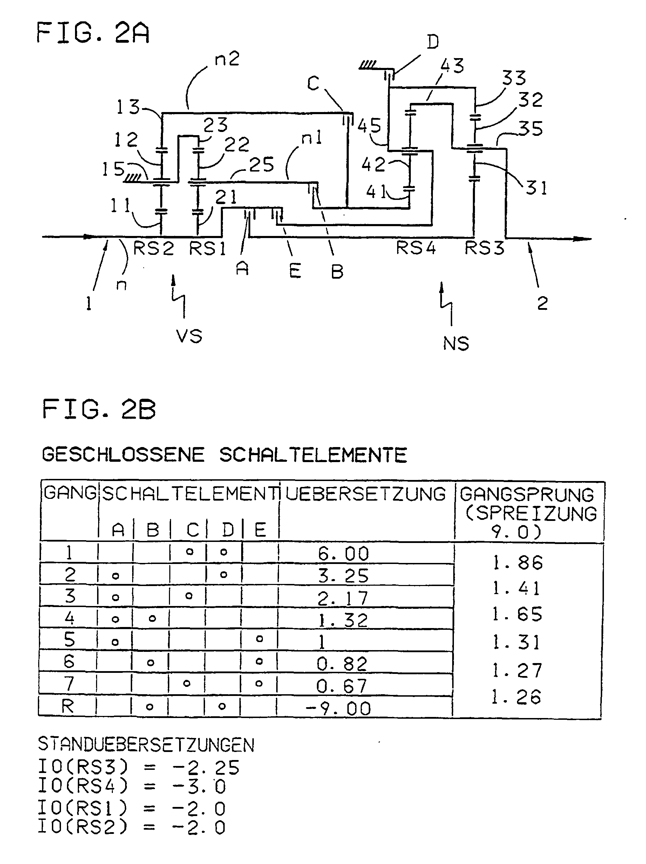

Im folgenden wird im Zusammenhang mit der Figur 2A eine weitere Ausführungsform der vorliegenden Erfindung beschrieben. Einzelheiten der Figur 2A, die bereits im Zusammenhang mit der Figur 1A erläutert wurden, sind in der entsprechenden Weise bezeichnet.

Die Ausführungsform 2A weist im Gegensatz zur Ausführungsform 1a als fünftes Schaltelement anstelle einer Kupplung eine im allgemeinen einfacher ansteuerbare Bremse auf.

Bei der Ausführungsform der Figur 2A sind beide Sonnenräder 11 und 21 mit der Antriebswelle 1 verbunden. Über die Kupplung A ist die Antriebswelle 1 mit dem Sonnenrad 31 und über die Kupplung E mit dem Steg 45 verbindbar. Der Steg 15 (Drehzahl n1) ist über die Kupplung B mit dem Sonnenrad 41 verbindbar. Das Hohlrad 13 ist mit dem Steg 25 verbunden, wobei der Steg 25 fest mit dem Gehäuse verbunden ist. Das Hohlrad 23 (Drehzahl n2) ist über die Kupplung C mit dem Sonnenrad 41 verbindbar. Der Steg 45 ist über die Bremse D mit dem Gehäuse verbindbar. Das Hohlrad 33 ist mit dem Steg 45 verbunden. Das Hohlrad 43 ist mit dem Steg 35 und mit der Abtriebswelle 2 verbunden.

Das Getriebe der Figur 2A läßt sich anhand der in der Figur 2b dargestellten Schließzustände der fünf Schaltelemente A bis E in sieben Vorwärtsgänge und einen Rückwärtsgang schalten.

Vorteilhaft bei der Ausführungsform 2 des erfindungsgemäßen Mehrstufengetriebes ist insbesondere die Overdrive-Charakteristik der beiden oberen Gänge hinsichtlich Reduzierung von Kraftstoffverbrauch und Fahrgeräusch. Weiterhin vorteilhaft ist die konstruktiv einfache Gestaltungsmöglichkeit der Bremse D anstelle einer Kupplung, beispielsweise hinsichtlich der Druckölzuführung zur Betätigung.

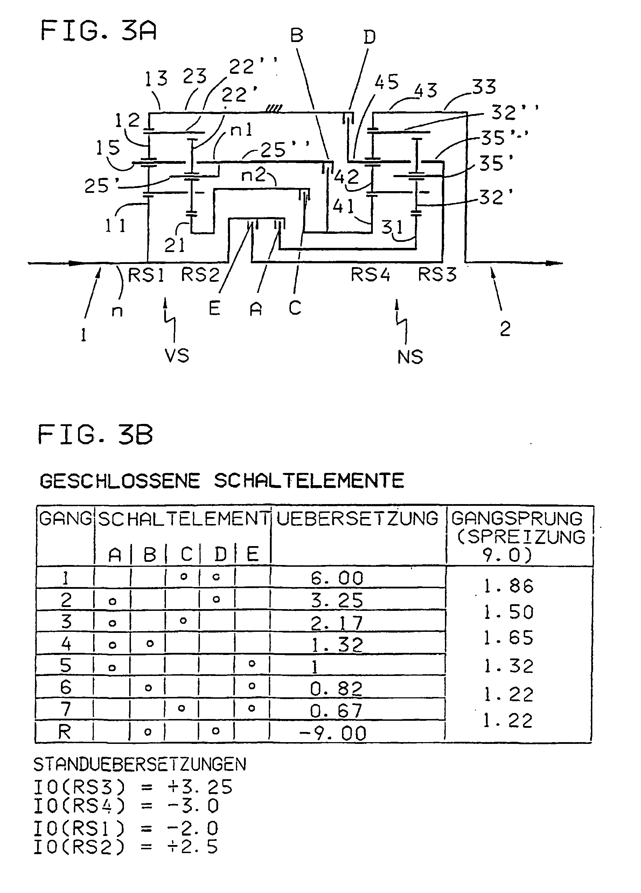

Die Figur 3A zeigt eine weitere Ausführungsform des erfindungsgemäßes Mehrstufengetriebe mit zwei gekoppelten, nicht schaltbaren Vorschaltradsätzen. Vorschaltradsatz VS und Nachschaltradsatz NS sind hierbei als Ravigneaux-Radsatz ausgebildet. Die Antriebswelle 1 ist mit dem Sonnenrad 11 des Radsatzes RS1 verbunden, über die Kupplung E mit den Stegen 35', 35'' der inneren und äußeren Planetenrädern 32', 32'' des Radsatzes RS2 und mit dem Steg 45 des Radsatzes RS4 verbindbar. Weiterhin ist die Antriebswelle 1 über die Kupplung A mit dem Sonnenrad 31 des Radsatzes RS3 verbindbar. Die miteinander verbundenen Stege 15, 25' und 25'' (Drehzahl n1) der Radsätze RS1 und RS2 sind über die Kupplung B mit dem Sonnenrad 41 des Radsatzes RS4 verbindbar. Die Planetenräder 12 des Radsatzes RS1 und die äußeren Planetenräder 22'' des Radsatzes RS2 sind miteinander gekoppelt. Das Sonnenrad 21 (Drehzahl n2) des Radsatzes RS2 ist über die Kupplung C mit dem Sonnenrad 41 des Radsatzes RS4 verbindbar. Das Hohlrad 13 des Radsatzes RS1 ist festgesetzt. Über die Bremse D sind die Stege 35', 35'' und 45 festsetzbar. Die Planetenräder 42 des Radsatzes RS4 und die äußeren Planetenräder 32'' des Radsatzes RS3 sind miteinander gekoppelt. Die Abtriebswelle 2 ist fest mit den miteinander verbundenen Hohlrädern 33 und 43 verbunden.

Mit der Anordnung der Figur 3A lassen sich mit der in der Figur 3B tabellarisch aufgeführten Kupplungslogik sieben Vorwärtsgänge und ein Rückwärtsgang schalten.

Vorteilhaft bei der Ausführungsform 3 des erfindungsgemäßen Mehrstufengetriebes ist insbesondere die kostengünstige Gestaltung der vier Planetenradsätze mit nur zwei Hohlrädern. Weiterhin kann die Overdrive-Charakteristik des beiden oberen Gänge vorteilhaft zur Kraftstoffeinsparung und zur Verringerung der Geräuschemission genutzt werden.

Figur 4A zeigt eine weitere Ausführungsform des erfingungsgemäßen Mehrstufengetriebes mit zwei gekoppelten, nicht schaltbaren Vorschaltradsätzen. Hierbei werden die zusätzlichen Drehzahlen n1 und n2 durch die Vorschaltradsätze RS1 und RS2 erzeugt, wobei die Stege 15 und 25 der Planetenräder 12 und 22 dieser Radsätze miteinander verbunden sind. Die Antriebswelle 1 ist mit den Hohlrädern 13 und 23 der Radsätze RS1 und RS2 verbunden und über die Kupplung E mit dem Hohlrad 33 des dritten Radsatzes RS3 verbindbar sowie über die Kupplung B mit dem Hohlrad 43 des vierten Radsatzes RS4 verbindbar. Das Sonnenrad 11 des ersten Radsatzes RS1 ist am Gehäuse festgelegt. Das Sonnenrad 21 (Drehzahl n2) des zweiten Radsatzes RS2 ist über die Kupplung D mit dem Steg 45 des Radsatzes RS4 verbindbar, wobei der Steg 45 mit dem Hohlrad 33 des Radsatzes RS3 verbunden ist. Die Stege 15 und 25 (Drehzahl n1) der Planetenräder 12 und 22 der Radsätze RS1 und RS2 sind über die Kupplung C mit dem Hohlrad 43 des Radsatzes RS4 verbindbar. Die Sonnenräder 31 und 41 der Radsätze RS3 und RS4 sind gemeinsam mit einer Bremse A blockierbar. Der Steg 35 des Radsatzes RS3 ist mit der Abtriebswelle 2 verbunden.

Mit der Anordnung der Figur 4A lassen sich die in der Figur 4B tabellarisch aufgeführten sieben Vorwärtsgänge und ein Rückwärtsgang durch Schließen der fünf Schaltelemente A bis E erreichen.

Die Ausführungsform 4 des erfindungsgemäßen Mehrstufengetriebes ist insbesondere für Offroad-Fahrzeuge besonders vorteilhaft, da hier insbesondere aufgrund der in Figur 4B aufgeführten Standübersetzungen der Radsätze ein Kriechgang mit hoher Übersetzung (i_1.Gang > 8) verfügbar ist, bei gleichzeitig günstiger Getriebeübersetzung im oberen Fahrgeschwindigkeitsbereich. Weiterhin wirkt sich die Verwendung eines Stufenplaneten bei gleichzeitigem Entfall eines vierten Hohlrades in der Herstellung kostengünstig aus.

Bei der Ausführungsform der Figur 5A des erfindungsgemäßen Mehrstufengetriebes mit zwei gekoppelten, nicht schaltbaren Vorschaltradsätzen ist das Hohlrad 13 festgesetzt. Der Steg 15 (Drehzahl n1) ist mit dem Steg 25 verbunden und über die Kupplung B mit dem Hohlrad 43 verbindbar. Das Hohlrad 23 (Drehzahl n2) ist über die Kupplung D mit dem Steg 45 und dem damit verbundenen Hohlrad 33 verbindbar. Die Antriebswelle 1 ist mit den Sonnenrädern 11 und 21 verbunden und über die Kupplung A mit den Sonnenrädern 41 und 31 verbindbar und über die Kupplung E mit dem Stegteil 45 und dem Hohlrad 33 verbindbar. Bei geschlossener Bremse C und bei geöffneter Kupplung B ist das Hohlrad 43 auf die Drehzahl 0 einstellbar. Der Steg 35 ist mit der Abtriebswelle 2 verbunden.

Die genauen Schließzustände der fünf Schaltelemente A bis E sind für die einzelnen Vorwärtsgänge 1 bis 7 und für den Rückwärtsgang R aus der Figur 5B ersichtlich.

Die Ausführungsform 5 des erfindungsgemäßen Mehrstufengetriebes ist ähnlich wie die Ausführungsform 4 insbesondere für Offroad-Fahrzeuge besonders vorteilhaft, da hier insbesondere aufgrund der in Figur 5B aufgeführten Standübersetzungen der Radsätze ein extremer Kriechgang mit sehr hoher Übersetzung (i_1.Gang = 10) schaltbar ist. Bedingt durch den großen Gangsprung vom 1. Gang (Kriechgang) in den 2. Gang kann es vorteilhaft sein, diesen Kriechgang als speziellen manuell durch den Fahrer schaltbaren Gang auszubilden. Durch die insgesamt sehr große Spreizung von 15 steht im normalen Fahrbetrieb eine günstige Getriebeabstufung zur Verfügung. Die Overdrive-Charakteristik der beiden oberen Gänge eine wirkt sich reduzierend aus auf Kraftstoffverbrauch und Fahrgeräusch.

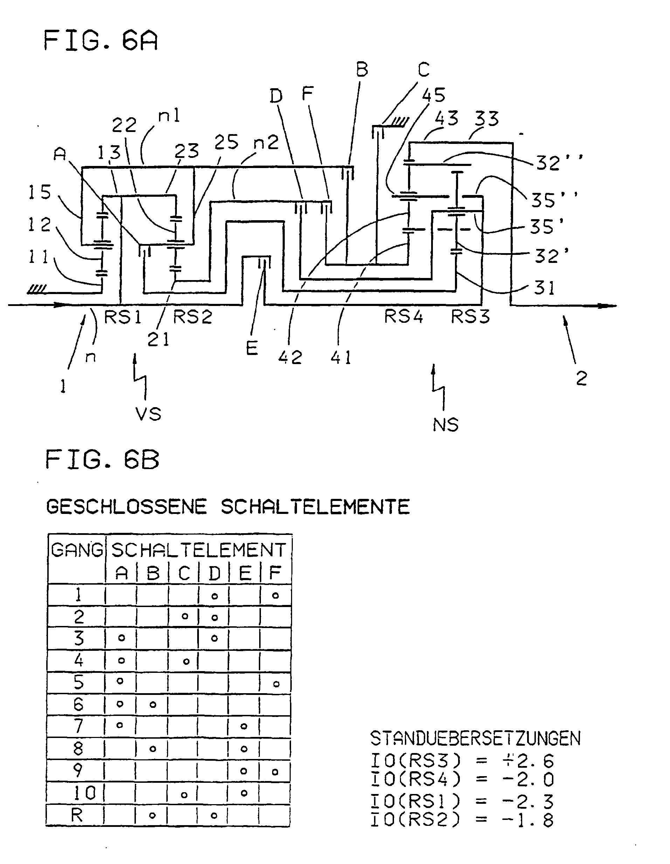

Die Ausführungsform der Figur 6A zeigt ein erfindungsgemäßes Mehrstufengetriebe mit zwei gekoppelten, nicht schaltbaren Vorschaltradsätzen, bei dem mit sechs Schaltelemente zehn Vorwärtsgange und ein Rückwärtsgang schaltbar sind. An der Welle mit den Kupplungen B und C des schaltbaren Nachschaltgetriebes ist eine zusätzliche Kupplung F vorgesehen. Es gilt: nC < nF < nB .

Dabei ist die Antriebswelle 1 (Drehzahl n) mit dem Hohlrad 13 und dem Hohlrad 23 verbunden sowie über das Schaltelement E mit den aneinander gekoppelten Stegen 45 des Radsatz RS4 , 35'' der äußeren Planetenräder 32'' und 35' der inneren Planetenräder 32' des Radsatzes RS3 verbindbar. Die Planetenräder 32 und 42 sind aneinander gekoppelt. Der Steg 25 ist mit dem Steg 15 verbunden (Drehzahl n1) und über die Kupplung B mit dem Sonnenrad 41 verbindbar. Das Sonnenrad 41 ist durch Betätigen der Bremse C blockierbar bzw. mit dem Gehäuse verbindbar. Die Stege 15 und 25 (Drehzahl n1) sind über die Kupplung A mit dem Sonnenrad 31 verbindbar. Das Sonnenrad 21 (Drehzahl n2) ist über die Kupplung D mit dem Steg 35' der inneren Planetenräder 32' des Radsatzes RS3 und über die Kupplung F mit dem Sonnenrad 41 des Radsatzes RS4 verbindbar. Die Hohlräder 33 und 43 sind miteinander und mit der Abtriebswelle 2 verbunden.

Mit diesem Mehrstufengetriebe lassen sich durch Schließen der Schaltelemente A bis F in Verbindung mit den in Figur 6B aufgeführten Standübersetzungen der Radsätze die in der Figur 6B tabellarisch dargestellten zehn Vorwärtsgänge und ein Rückwärtsgang schalten. Durch das zusätzliche Schaltelement stehen gegenüber den bisherigen Ausführungsformen 1 bis 5 des erfindungsgemäßen Mehrstufengetriebes mit sieben Vorwärtsgängen somit drei weitere Vorwärtsgänge zur Verfügung. Vorteilhafterweise kann die Gangabstufung eng ausgelegt werden und ist damit beispielsweise für ein Fahrzeug mit Dieselmotor günstig.

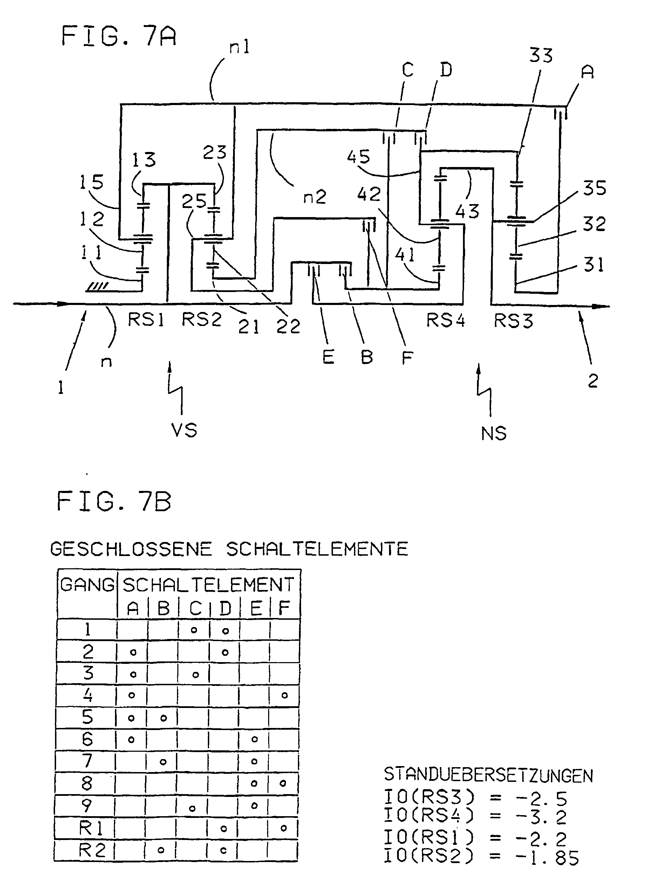

Im folgenden wird im Zusammenhang mit den Figuren 7A und 7B ein erfindungsgemäßes Mehrstufengetriebe mit zwei gekoppelten, nicht schaltbaren Vorschaltradsätzen beschrieben, bei dem mit sechs Schaltelementen A bis F neun Vorwärtsgänge und zwei Rückwärtsgänge schaltbar sind.

Die Antriebswelle 1 ist mit dem Hohlrad 13 des Vorschaltradsatzes RS1 und dem damit verbundenen Hohlrad 23 des Vorschaltradsatzes RS2 verbunden, sowie über die Kupplung E mit dem Steg 45 und über die Kupplung B mit dem Sonnenrad 41 verbindbar. Der Steg 25 der Planetenräder 22 ist mit dem Steg 15 (Drehzahl n1) verbunden sowie über die Kupplung A mit dem Sonnenrad 31 verbindbar. Ferner sind der Steg 25 und der Steg 15 über die Kupplung F mit dem Sonnenrad 41 verbindbar. Das Sonnenrad 21 (Drehzahl n2) ist über die Kupplung C mit dem Sonnenrad 41 verbindbar und über die Kupplung D mit dem Steg 45 verbindbar, der mit dem Hohlrad 33 verbunden ist. Das Hohlrad 43 ist mit dem Steg 35 und mit der Abtriebswelle 2 verbunden.

Mit dieser beschriebenen Ausführungsform 7 des erfindungsgemäßen Mehrstufengetriebes lassen sich durch selektives Schließen der Schaltelemente A bis F in der in Figur 7B tabellarisch dargestellen Weise in Verbindung mit den in Figur 7B aufgeführten Standübersetzungen der Radsätze neun Vorwärtsgänge mit enger Gangstufung und vorteilhafterweise zwei Rückwärtsgänge schalten. Ein spezieller Rückwärtsgang mit gegenüber dem "normalen" Rückwärtsgang reduzierte Anfahrübersetzung kann beispielsweise in ein Winterfahrprogramm des Automatgetriebes einbezogen werden.

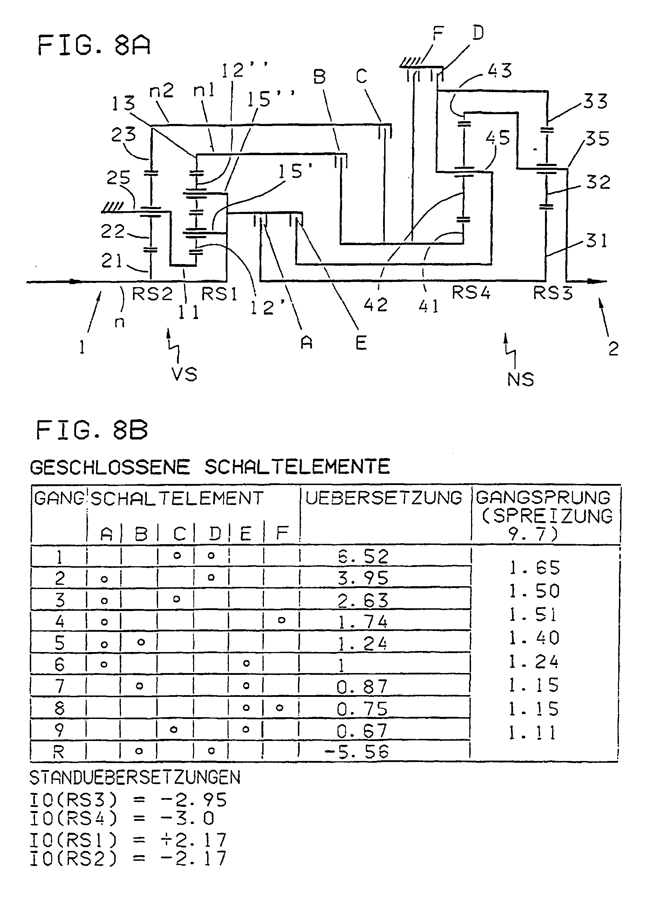

Die Ausführungsform der Figur 8A zeigt ein erfindungsgemäßes Mehrstufengetriebe mit zwei gekoppelten, nicht schaltbaren Vorschaltradsätzen, wobei zur Betätigung dieses Getriebes insgesamt sechs Schaltelemente A bis F vorgesehen sind zum Schalten von neun Vorwärtsgängen und einem Rückwärtsgang.

Im Vergleich zu dem Mehrstufengetriebe der Figur 6A, welches mit fünf Kupplungen und einer Bremse ausgestattet ist, weist das Mehrstufengetriebe der Fig. 8A vier Kupplungen und zwei Bremsen auf, wodurch sich die Zahl der Vorwärtsgänge im Vergleich zu Fig. 6A um einen Gang reduziert.

Während es sich bei dem Radsatz RS2 um ein Minus-Getriebe handelt, handelt es sich bei dem Radsatz RS1 um ein Plus-Getriebe. Die Antriebswelle 1 ist mit dem Sonnenrad 21 sowie dem Steg 15'' der äußeren Planetenräder 22'' des Radsatzes RS1 verbunden und über die Kupplung A mit dem Sonnenrad 31 sowie über die Kupplung E mit dem Steg 45 verbindbar. Der Steg 25 ist einerseits mit dem Gehäuse des Getriebes und andererseits mit dem Sonnenrad 11 des Radsatzes RS1 verbunden. Der Steg 15' der inneren Planetenräder 12' ist mit dem Steg 15'' der äußeren Planetenräder 12'' des Radsatzes RS1 verbunden. Das Hohlrad 13 des Radsatzes RS1 (Drehzahl n1) ist über die Kupplung B mit dem Sonnenrad 41 verbindbar. Das Hohlrad 23 (Drehzahl n2) ist über die Kupplung C mit dem Sonnenrad 41 verbindbar. Das Sonnenrad 41 ist durch Betätigen der Bremse F mit dem Gehäuse verbindbar. Der Steg 45 ist durch Betätigen der Bremse D mit dem Gehäuse verbindbar. Außerdem ist der Steg 45 mit dem Hohlrad 33 verbunden. Das Hohlrad 43 ist mit dem Steg 35 und mit der Abtriebswelle 2 verbunden.

Die Kupplungslogik für die sechs Schaltelemente A bis F zum Schalten der neun Vorwärtsgänge und des Rückwärtsgangs dieses Mehrstufengetriebes nach Figur 8A ist in der Figur 8b tabellarisch dargestellt.

In vorteilhafter Weise sind bei der Ausführungsform 8 des erfindungsgemäßen Mehrstufengetriebes zwei Schaltelemente als Bremsen ausgebildet, wodurch sich gegenüber Kupplungen Vorteile in der konstruktiven Ausgestaltung ergeben, beispielsweise durch eine einfache Verlegung der Druckölkanäle im Getriebegehäuse. Besonders vorteilhaft ist auch die sehr harmonische Gangstufung der neun Vorwärtsgänge mit annähernd stetigen, zu den oberen Gängen hin langsam fallenden Gangsprüngen.

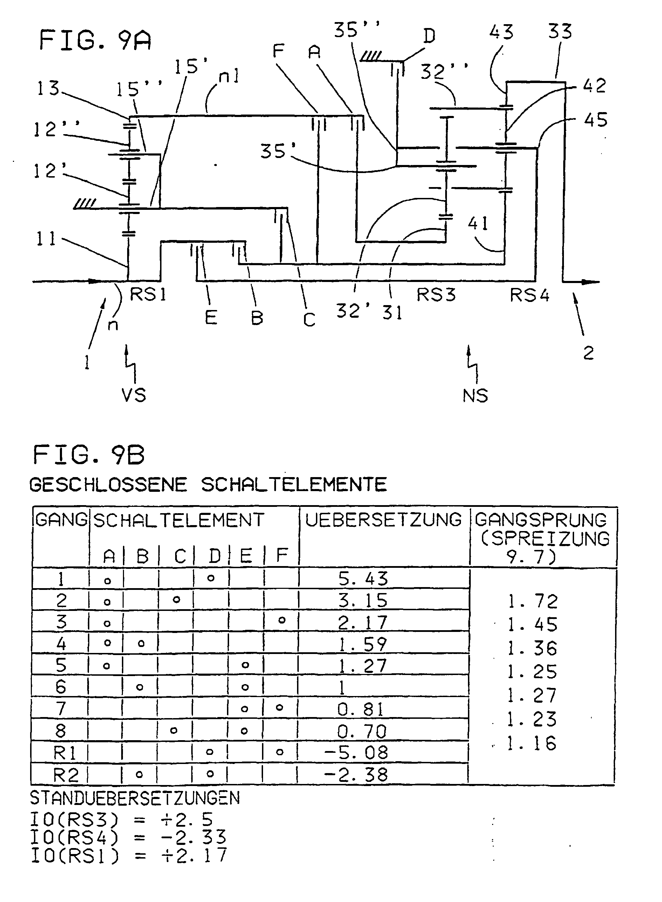

Im folgenden wird im Zusammenhang mit den Figuren 9A und 9B ein weiteres, nicht zur Erfindung gehörendes Mehrstufengetriebe erläutert, bei dem mit insgesamt sechs Schaltelementen A bis F acht Vorwärtsgänge und zwei Rückwärtsgänge schaltbar sind.

Die Besonderheit dieses Getriebes ist, daß nur ein nicht schaltbarer Vorschaltradsatz RS1 anstelle der bisher beschriebenen jeweils zwei Vorschaltsätze vorhanden ist. Die Antriebswelle 1 (Drehzahl n) ist mit dem Sonnenrad 11 des Radsatzes RS1 (Plus-Getriebe) verbunden und über die Kupplung E mit dem Steg 45 verbindbar sowie über die Kupplung B mit dem Sonnenrad 41 verbindbar. Der Steg 15' der inneren Planetenräder 12' des Radsatzes RS1 und der Steg 15'' der äußeren Planetenräder 12'' des Radsatzes RS1 sind miteinander verbunden und am Gehäuse festgesetzt. Darüber hinaus sind der Steg 15' und der Steg 15'' über die Kupplung C mit dem Sonnenrad 41 verbindbar. Das Hohlrad 13 (Drehzahl n1) ist über die Kupplung F mit dem Sonnenrad 41 verbindbar und über die Kupplung A mit dem Sonnenrad 31 verbindbar. Das Hohlrad 43 ist mit dem Hohlrad 33 und mit der Abtriebswelle 2 verbunden. Die Stege 45 (der Planetenräder 42), 35' (der inneren Planetenräder 32') und 35'' (der äußeren Planetenräder 32'') sind miteinander verbunden und durch die Bremse D blockierbar. Die Planetenräder 32'' und 42 sind dabei miteinander gekoppelt.

Die Kupplungslogik dieses Mehrstufengetriebes zum Schalten von acht Vorwärtsgängen und zwei Rückwärtsgängen durch Schließen der Schaltelemente A bis F ist in Figur 9B dargestellt.

Vorteilhaft bei der Ausführungsform 9 des Mehrstufengetriebes ist neben der Gangzahl insbesondere die bauraumsparende und kostengünstige Bauweise, da nur drei Planetenradsätze mit insgesamt nur zwei Hohlrädern vorgesehen sind. Die Gangabstufung ist harmonisch, wobei neben dem "normalen" auch ein "schneller" Rückwärtsgang geschaltet werden kann, ähnlich der Ausführungsform 7.

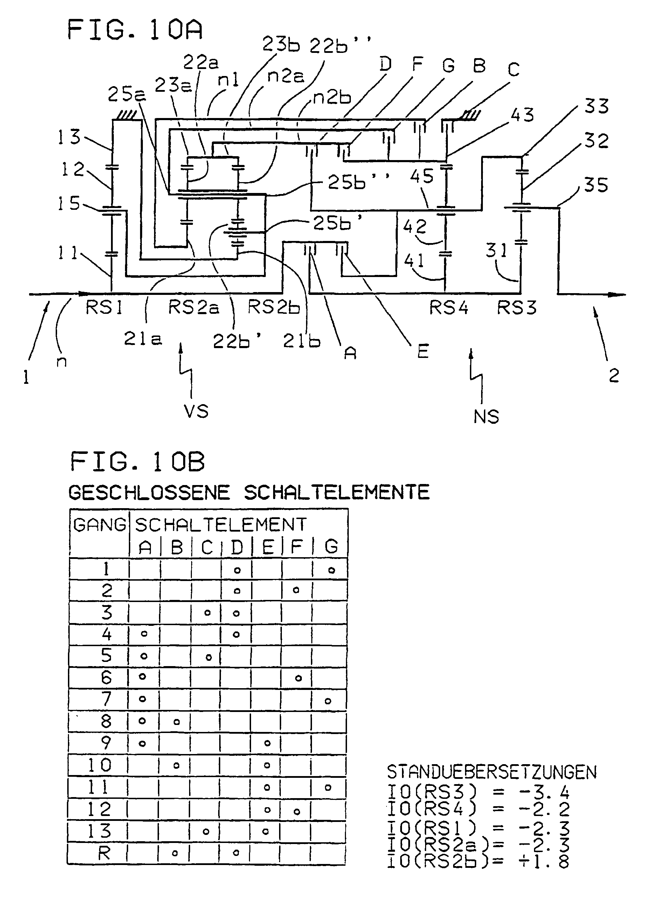

Die Figur 10A zeigt ein Mehrstufengetriebe mit drei gekoppelten, nicht schaltbaren Vorschaltradsätzen RS1, RS2a und RS2b, bei dem mit sieben Schaltelementen A bis G insgesamt dreizehn Vorwärtsgänge und ein Rückwärtsgänge schaltbar sind. An der Welle mit den Kupplungen B, C und F wird eine zusätzliche Kupplung G vorgesehen. Es gilt: nF < nG < nB. Die Eingangsdrehzahlen werden durch ein nicht schaltbares Dreisteg-Fünfwellen-Getriebe erzeugt.

Die Antriebswelle 1 (Drehzahl n) ist mit dem Sonnenrad 11 des ersten Vorschaltradsatzes RS1 verbunden und über die Kupplung A mit dem Sonnenrad 31 des ersten Nachschaltradsatzes RS3 und dem damit verbundenen Sonnenrad 41 des zweiten Nachschaltradsatzes RS4 sowie über die Kupplung E mit dem Steg 45 des zweiten Nachschaltradsatzes RS4 verbindbar.

Der bei den bisher erläuterten Getrieben vorgesehene Radsatz RS2 wird hier durch die Radsätze RS2a und RS2b gebildet, wobei die Stege 25a und 25b'' der Planetenräder 22a des Radsatzes RS2a und der äußeren Planetenräder 22b'' des als Plus-Getriebe ausgebildeten Radsatzes RS2b aneinander gekoppelt sind. Die Planetenräder 22a und 22b" sind dabei miteinander gekoppelt. Der Steg 15 ist mit den Stegen 25b' der inneren Planetenräder 22b' und dem Steg 25b'' der äußeren Planetenräder 22b'' verbunden. Außerdem ist der Steg 25b'' über die Kupplung G mit dem Hohlrad 43 verbindbar (Drehzahl n2a). Das Hohlrad 43 ist durch die Bremse C blockierbar. Das Sonnenrad 21a des Radsatzes RS2a (Drehzahl n1) ist über die Kupplung B mit dem Hohlrad 43 verbindbar. Das Hohlrad 23a des Radsatzes RS2a und das Hohlrad 23b des Radsatzes RS2b sind miteinander verbunden (Drehzahl n2b) und sind über die Kupplung F mit dem Hohlrad 43 und über die Kupplung D mit dem Steg 45 und dem damit verbundenen Hohlrad 33 verbindbar. Der Steg 35 ist mit der Abtriebswelle 2 verbunden. Schließlich sind das Sonnenrad 21b des Radsatzes RS2b und das Hohlrad 13 des Radsatzes RS1 mit dem Gehäuse verbunden.

Mit diesem beschriebenen Mehrstufengetriebe lassen sich durch selektives Schließen der sieben Schaltelemente A bis G in Verbindung mit den in Figur 10B aufgeführten Standübersetzungen der Radsätze die in der Figur 10B tabellarisch dargestellten dreizehn Vorwärtsgänge und ein Rückwärtsgang schalten.

Die Vorteile dieser Ausführungsform 10 des erfindungsgemäßen Mehrstufengetriebes liegen somit in der hohen Gangzahl bei einem sehr kompakten Getriebeaufbau mit nur fünf Planetenradsätzen und sieben Schaltelementen. Durch geeignete Wahl der Übersetzungen der Radsätze kann aus der Ausführungsform 10 auch ein Mehrstufengetriebe mit zwei Rückwärtsgängen abgeleitet werden, dann allerdings mit nur zwölf Vorwärtsgängen.

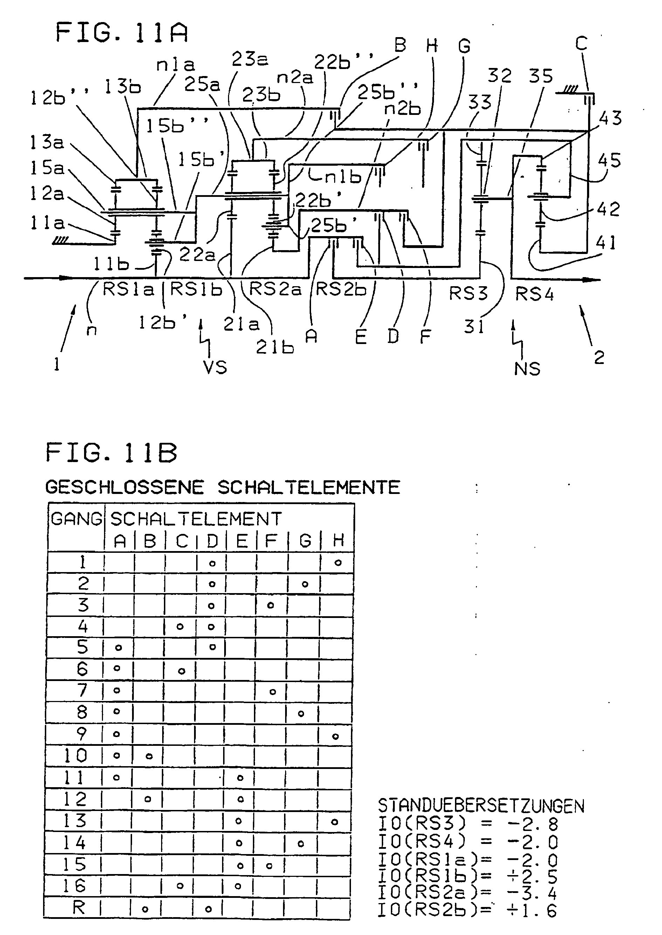

Bei der Ausführungsform der Figur 11A des erfindungsgemäßen Mehrstufengetriebes lassen sich mit acht Schaltelementen A bis H insgesamt sechzehn Vorwärtsgänge und ein Rückwärtsgang schalten.
Die Welle mit den Kupplungen B, C, F und G wird mit einer zusätzlichen Kupplung H ausgestattet.
Es gilt: nG < nH < nB. Die Eingangsdrehzahlen werden durch ein nicht schaltbares Viersteg-Sechswellen-Getriebe erzeugt.

Der Vorschaltradsatz VS weist insgesamt vier gekoppelte, nicht schaltbare Planetenradsätze auf. Der Vorschaltradsatz RS1 besteht aus einem Radsatz RS1a und einem Radsatz RS1b, wobei die Planetenräder 12a des Radsatzes RS1a und die äußeren Planetenräder 12b'' des Radsatzes RS1b aneinander gekoppelt sind und der Steg 15b'' der äußeren Planetenräder 12b'' mit dem Steg 15b' der inneren Planetenräder 12b' verbunden ist. Der Radsatz RS2 umfaßt zwei Radsätze RS2a und RS2b, wobei die Planetenräder 22a des Radsatzes RS2a und die äußeren Planetenräder 22b'' des Radsatzes RS2b aneinander gekoppelt sind.

Die Antriebswelle 1 (Drehzahl n) ist mit dem Sonnenrad 11b des Radsatzes RS1b und dem Sonnenrad 21a des Radsatzes RS2a verbunden und über die Kupplung A mit dem Sonnenrad 31 und über die Kupplung E mit dem Hohlrad 33 verbindbar. Das Sonnenrad 11a des Radsatzes RS1a ist mit dem Gehäuse verbunden. Die Hohlräder 13a des Radsatzes RS1a und 13b des Radsatzes RS1b sind miteinander verbunden (Drehzahl n1a) und über die Kupplung B mit dem Sonnenrad 41 des zweiten Nachschaltradsatzes RS4 verbindbar. Das Sonnenrad 41 ist durch die Bremse C blockierbar. Das Sonnenrad 21b des Radsatzes RS2b (Drehzahl n2b) ist über die Kupplung D mit dem Hohlrad 33 verbindbar sowie über die Kupplung F mit dem Sonnenrad 41 verbindbar. Das Hohlrad 33 ist mit dem Steg 45 verbunden. Die Stege 25b' der inneren Planetenräder 22b' und 25b'' der äußeren Planetenräder 22b'' des Radsatzes RS2b und der Steg 25a des Radsatzes RS2a sind miteinander verbunden (Drehzahl n1b) und über die Kupplung H mit dem Sonnenrad 41 verbindbar. Die gekoppelten Hohlräder 23a und 23b (Drehzahl n2a) der Radsätze RS2a und RS2b ist über die Kupplung G ebenfalls mit dem Sonnenrad 41 verbindbar. Das Sonnenrad 43 ist mit dem Steg 35 und mit der Abtriebswelle 2 verbunden.

Mit dem beschriebenen Getriebe lassen sich in Verbindung mit den in Figur 11B aufgeführten Standübersetzungen der Radsätze durch Schließen der acht Schaltelemente A bis H die in der Figur 11B tabellarisch dargestellten sechzehn Vorwärtsgänge und ein Rückwärtsgang betätigen. Die Vorteile dieser Ausführungsform 11 des erfindungsgemäßen Mehrstufengetriebes liegen somit in der sehr hohen Gangzahl bei einem kompakten Getriebeaufbau mit vergleichsweise geringen Anzahl von Planetenradsätzen und Schaltelementen. Durch geeignete Wahl der Übersetzungen der Radsätze kann aus der Ausführungsform 11 auch ein Mehrstufengetriebes Mehrstufengetriebe mit zwei Rückwärtsgängen abgeleitet werden, die Anzahl der Vorwärtsgänge reduziert sich dann allerdings auf fünfzehn.

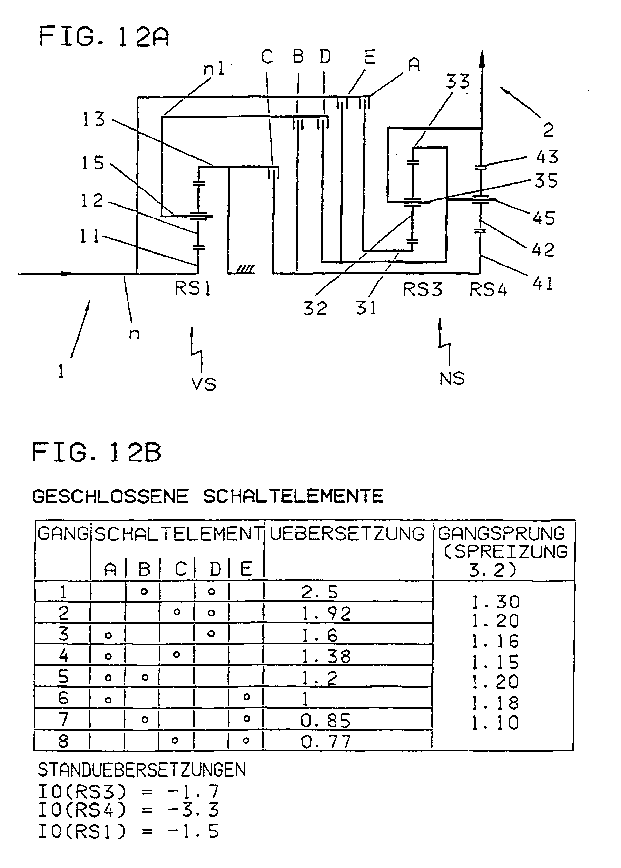

Im folgenden wird im Zusammenhang mit der Figur 12A ein Mehrstufengetriebe erläutert, welches acht Vorwärtsgänge aufweist, die durch fünf schaltelemente und nur einen Vorschaltradsatz RS1 schaltbar sind, was dadurch erreicht wird, daß die zuvor genannte kinematische Bedingung "Drehzahl am Schaltelement D ist kleiner / gleich als die Drehzahl am Schaltelement B" eingeschränkt wird durch die Bedingung "Drehzahl am Schaltelement D ist gleich Drehzahl am Schaltelement B".

Das Hohlrad 13 des Vorschaltradsatzes RS1 ist fest über eine Achse mit dem Gehäuse des Mehrstufengetriebes verbunden. Die Antriebswelle 1 (Drehzahl n) ist mit dem Sonnenrad 11 des Vorschaltradsatzes RS1 verbunden, über die Kupplung E mit dem Hohlrad 33 des ersten Nachschaltradsatzes RS3 und dem damit verbundenen Steg 45 des zweiten Nachschaltradsatzes RS4 verbindbar sowie über die Kupplung A mit dem Sonnenrad 31 des Radsatzes RS3 verbindbar. Der Steg 15 (Drehzahl n1) des Radsatzes RS1 ist über die Kupplung B mit dem Sonnenrad 41 des Radsatzes RS4 und über die Kupplung D mit dem Hohlrad 33 des Radsatzes RS3 verbindbar. Über die Bremse C kann das Sonnenrad 41 des Radsatzes RS4 festgesetzt werden. Das Hohlrad 43 des Radsatzes RS4 und der damit verbundene Steg 35 des Radsatzes RS3 sind mit der Abtriebswelle 2 verbunden.

Mit dem erläuterten Getriebe lassen sich durch selektives Schließen der Schaltelemente A bis E die in der Figur 12B dargestellten insgesamt acht Vorwärtsgänge schalten.

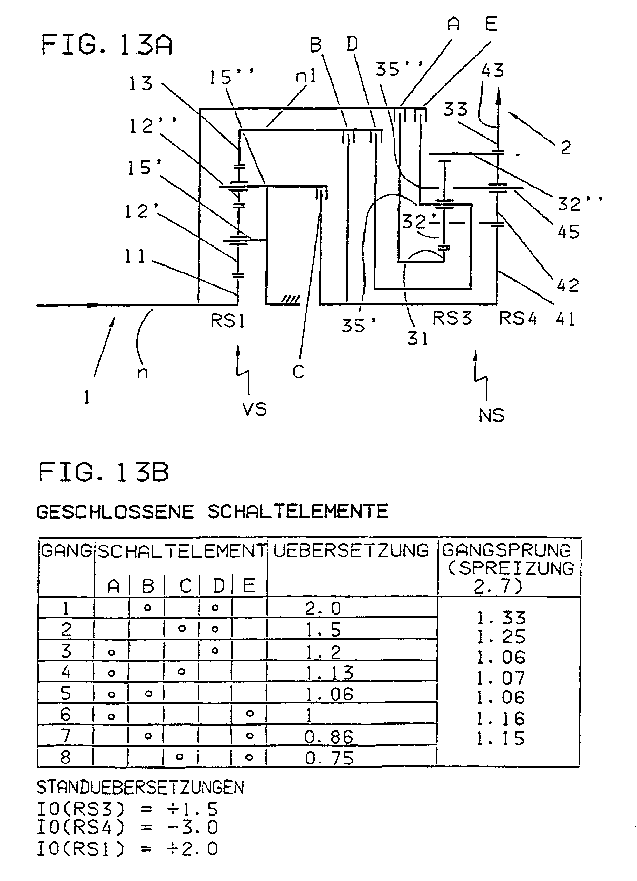

Im folgenden wird im Zusammenhang mit der Figur 13A eine weitere Ausführungsform eines nicht zur Erfindung gehörenden Mehrstufengetriebes mit acht Vorwärtsgängen erläutert, die durch fünf Schaltelemente schaltbar sind.

Bei diesem Getriebe ist ebenfalls ein einziger Vorschaltradsatz RS1 vorgesehen, der die zur Steuerung der nachgeschalteten Radsätze RS3 und RS4 erforderlichen Drehzahlen erzeugt. Der Vorschaltradsatz RS1 weist neben einem Sonnenrad 11 und einem Hohlrad 13 innere Planetenräder 12' und äußeren Planetenräder 12'' auf, deren Stege 15' und 15'' miteinander verbunden sind.

Die Antriebswelle 1 (Drehzahl n) ist mit dem Sonnenrad 11 des Vorschaltradsatzes RS1 verbunden und über die Kupplung E mit dem Steg 35'' der äußeren Planetenräder 32'' des ersten Nachschaltradsatzes RS3 verbindbar, sowie über die Kupplung A mit dem Sonnenrad 31 des Radsatzes RS3 verbindbar. Die Stege 15' und 15'' des Radsatzes RS1 sind mit dem Gehäuse des Mehrstufengetriebes verbunden. Über die Bremse C ist das Sonnenrad 41 des Radsatzes RS4 blockierbar. Das Hohlrad 13 (Drehzahl n1) des Radsatzes RS1 ist über die Kupplung B mit dem Sonnenrad 41 und über die Kupplung D mit dem Steg 35' der inneren Planetenräder 32' des Radsatzes RS3 verbindbar. Der Steg 35' ist mit dem Steg 35'' der äußeren Planetenräder 32'' des Radsatzes RS3 und mit dem Steg 45 des Radsatzes RS4 verbunden. Die Planetenräder 32'' und 42 sind dabei miteinander gekoppelt. Die Hohlräder 33 und 43 der Radsätzes RS3 und RS4 sind mit der Abtriebswelle 2 verbunden.

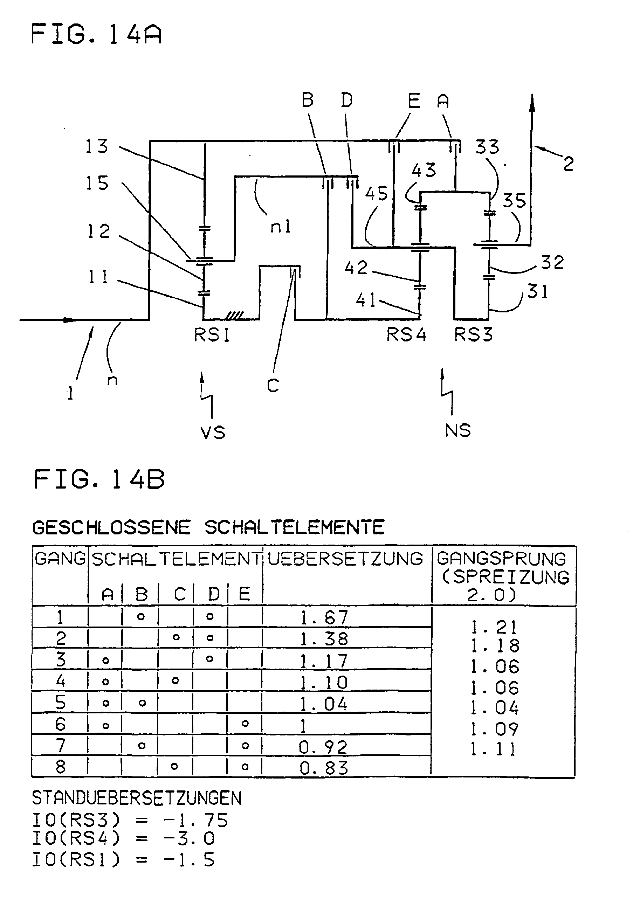

Mit diesem beschriebenen Getriebe lassen sich durch selektives Schliessen der Schaltelemente A bis E die in der Figur 14B dargestellten insgesamt acht Vorwärtsgänge schalten.

Im folgenden wird im Zusammenhang mit der Figur 14B eine weitere Ausführungsform eines nicht zur Erfindung gehörenden Mehrstufengetriebes mit erläutert, die durch fünf Schaltelemente schaltbar sind, wobei wiederum nur ein Vorschaltradsatz vorgesehen ist.

Das Sonnenrad 11 des Vorschaltradsatzes RS1 ist fest mit dem Gehäuse des Mehrstufengetriebes verbunden.
Die Antriebwelle 1 (Drehzahl n) ist mit dem Hohlrad 13 des Radsatzes RS1 verbunden und über die Kupplung E mit dem Steg 45 des zweiten Nachschaltradsatzes RS4 und dem damit verbundenen Sonnenrad 31 des ersten Nachschaltradsates RS3 verbindbar, sowie über die Kupplung A mit dem Hohlrad 33 des Radsatzes RS3 und dem damit verbundenen Hohlrad 43 des Radsatzes RS4 verbindbar. Der Steg 15 (Drehzahl n1) des Radsatzes RS1 ist über die Kupplung B mit dem Sonnenrad 41 und über die Kupplung D mit dem Steg 45 des Radsatzes RS4 verbindbar. Über die Bremse C kann das Sonnenrad 41 des Radsatzes RS4 festgesetzt werden. Der Steg 35 des Radsatzes RS3 ist mit der Abtriebswelle 2 verbunden.

Mit dem erläuterten Getriebe lassen sich durch selektives Schließen der Schaltelemente A bis E die in der Figur 14B dargestellten insgesamt acht Vorwärtsgänge schalten.

In vorteilhafter Weise werden mit den Ausführungsformen 12, 13 und 14 des Mehrstufengetriebes mit nur drei Planetenradsätzen und fünf Schaltelementen insgesamt acht Vorwärtsgänge erzielt. Insbesondere wegen des äußerst kompakten Getriebeaufbaus und des Entfalls des Rückwärtsganges eignet sich diese Ausführungsformen 12, 13 und 14 besonders für Motorräder und als Nabenschaltung für Fahrräder. Für die Anwendung im Motorrad ist die Gangstufung der Ausführungsform 12 vorteilhaft, da hier die beiden oberen Gänge eine gemäßigte Overdrive-Charakteristik aufweisen. Für die Anwendung im Fahrrad ist die enge Gangabstufung in den mittleren Gängen in Verbindung mit den zu kleineren Gängen hin größer werdenden Gangsprüngen der Ausführungsformen 13 und 14 besonders vorteilhaft.

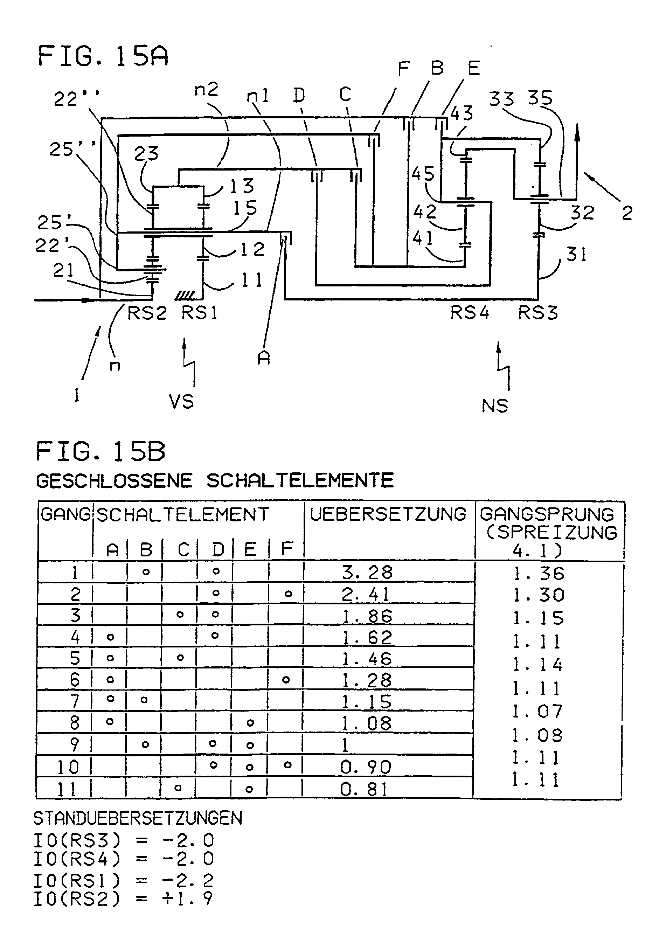

Im folgenden wird im Zusammenhang mit der Figur 15A ein weiteres erfindungsgemäßes Mehrstufengetriebe mit zwei gekoppelten, nicht schaltbaren Vorschaltradsätzen erläutert, mit dessen Hilfe insgesamt elf Vorwärtsgänge durch selektives Betätigen von sechs Schaltelemente A bis F schaltbar sind.

Der zweite Vorschalradsatz RS2 ist als Plus-Getriebe und der erste Vorschaltradsatz RS1 als Minus-Getriebe ausgebildet, wobei die äußeren Planetenräder 22'' des Radsatzes RS2 fest an die Planetenräder 12 des Radsatzes RS1 gekoppelt sind. Die Antriebswelle 1 (Drehzahl n) ist mit dem Sonnenrad 21 des Radsatzes RS2 verbunden, sowie über die Kupplung B mit dem Sonnenrad 41 und über die Kupplung E mit dem Steg 45 des zweiten Nachschaltradsatzes RS4 verbindbar, wobei der Steg 45 der mit dem Hohlrad 33 des ersten Nachschaltradsatzes RS3 verbunden ist. Der den äußeren Planetenrädern 22'' des Radsatzes RS2 und den Planetenrädern 12 des Radsatzes RS1 gemeinsame Steg 15 (Drehzahl n1) ist über die Kupplung A mit dem Sonnenrad 31 des Radsatzes RS3 verbindbar und über die Kupplung F mit dem Sonnenrad 41 des Radsatzes RS4 verbindbar. Außerdem ist der Steg 15 mit den Stegen 25'' der äußeren Planetenräder 22'' und 25' der inneren Planetenräder 22' des Radsatzes RS2 verbunden. Die gekoppelten Hohlräder 13 und 23 (Drehzahl n2) der Radsätze RS1 und RS2 sind über die Kupplung D mit dem Steg 45 sowie über die Kupplung C mit dem Sonnenrad 41 des Radsatzes RS4 verbindbar. Der Steg 35 des Radsatzes RS3 ist mit dem Hohlrad 43 des Radsatzes RS4 und mit der Abtriebswelle 2 verbunden.

Mit diesem Mehrstufengetriebe lassen sich durch selektives Schliessen der Schaltelemente A bis F in der in der Figur 15B dargestellten Weise die elf Vorwärtsgänge schalten.

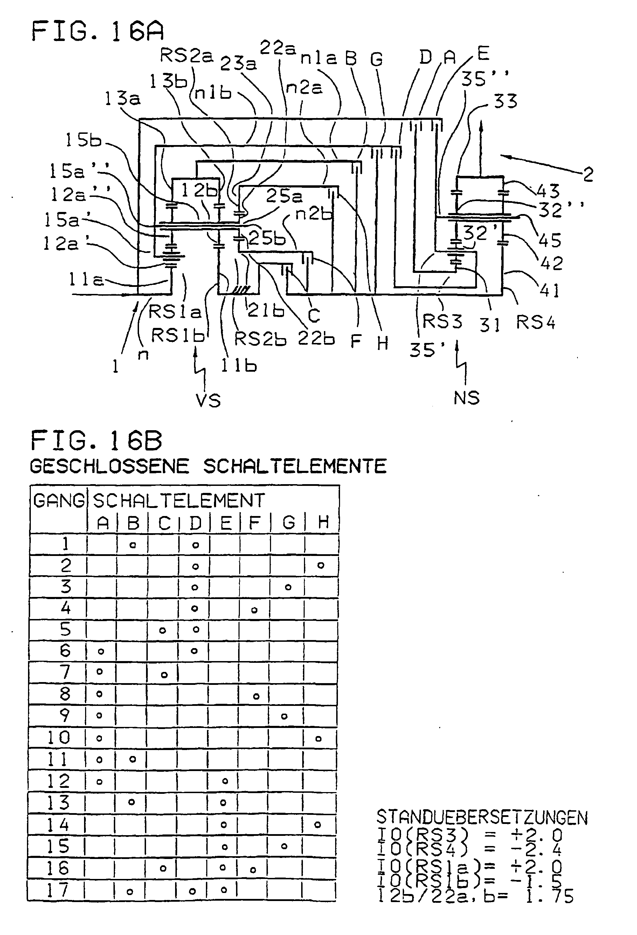

Schließlich wird im Zusammenhang mit der Figur 16A ein weiteres erfindungsgemäßes Mehrstufengetriebe beschrieben, bei dem durch acht Schaltelemente siebzehn Vorwärtsgänge schaltbar sind. Ähnlich des Ausführungsbeispiels 11A, sind hier insgesamt vier gekoppelte, nicht schaltbare Vorschaltradsätze vorgesehen. Der Vorschaltradsatz RS1 besteht dabei aus einem Radsatz RS1a und einen Radsatz RS1b, der Vorschaltradsatz RS2 aus einem Radsatz RS2a und einem Radsatz RS2b.

Die Antriebswelle 1 ist mit dem Sonnenrad 11a des ersten Vorschaltradsatzes RS1a (Plus-Getriebe) verbunden und über die Kupplung A mit dem Sonnenrad 31 des ersten Nachschaltradsatzes RS3 verbindbar, sowie über die Kupplung E mit den Stegen 35' der inneren Planetenräder 32' und 35'' der äußeren Planetenräder 32'' des Radsatzes RS3 (Plus-Getriebe) verbindbar. Der Steg 15a' der inneren Planetenräder 12a' des Radsatzes RS1a und der Steg 15'' der äußeren Planetenräder 12a'' des Radsatzes RS1a sind miteinander verbunden. Der Radsatz RS1b ist als Minus-Getriebe ausgebildet. Hierbei entspricht das Sonnenrad 11b des zweiten Vorschalt-Radsatzes RS1b dem Sonnenrad 21a des dritten Vorschaltradsatzes RS2a. Weiterhin entspricht das Hohlrad 13b des zweiten Radsatzes RS1b dem Hohlrad 23b des vierten Vorschaltradsatzes RS2b. Die äußeren Planetenräder 12a'' des Radsatzes RS1a, die Planetenräder 12b des Radsatzes RS1b, die Planetenräder 22a des Radsatzes RS2a und die Planetenräder 22b des Radsatzes RS2b sind als Stufenplanet aneinandergekoppelt. Ihnen ist der Steg 15a'' gemeinsam zugeordnet. Der Steg 15a'' (Drehzahl n1b) ist über die Kupplung G mit dem Sonnenrad 41 des zweiten Nachschaltradsatzes RS4 (Minus-Getriebe) sowie über die Kupplung D mit dem Steg 35' der inneren Planetenräder 32' des ersten Nachschaltradsatzes RS3 verbindbar. Der Radsatz RS3 ist als Plus-Getriebe ausgebildet. Die äußeren Planetenräder 32'' des Radsatzes RS3 sind an die Planetenräder 42 des Radsatzes RS4 gekoppelt. Der Steg 35' der inneren Planetenräder 32' ist mit dem Steg 35'' der äußeren Planetenräder 32'' des Radsatzes RS3 verbunden. Das Sonnenrad 11b des Radsatzes RS1b ist mit dem Gehäuse verbunden. Das Sonnenrad 21b des Radsatzes RS2b (Drehzahl n2b) ist über die Kupplung F mit dem Sonnenrad 41 verbindbar, welches über die Bremse C ebenfalls mit dem Gehäuse verbindbar ist. Die Hohlräder 13a des Radsatzes RS1a und 13b des Radsatzes RS1b sind miteinander verbunden und über die Kupplung B (Drehzahl n1a) mit dem Sonnenrad 41 verbindbar. Der Steg 35'' (und damit auch Steg 35') ist mit dem Steg 45 sind miteinander verbunden. Das Hohlrad 23a des Radsatzes RS2a (Drehzahl n2a) ist über die Kupplung H mit dem Sonnenrad 41 des Radsatzes RS4 verbindbar. Schließlich sind die Hohlräder 33 und 43 mit der Abtriebswelle 2 verbunden.

Mit diesem Mehrstufengetriebe lassen sich in Verbindung mit den in Figur 16B aufgeführten Standübersetzungen der Radsätze durch selektives Schliessen der acht Schaltelemente A bis H in der in Figur 16B dargestellten Weise insgesamt siebzehn Vorwärtsgänge schalten.

Ähnlich den Ausführungsformen 12, 13 und 14 eignen sich die beschriebenen Ausführungsformen 15 und 15 des erfindungsgemäßen Mehrstufengetriebes für Motorräder und insbesondere als Nabenschaltung für Fahrräder, mit einer entsprechend hohen Gangzahl.

### Bezugszeichen

- VS: Vorschalt-Planetenradsatz
- RS1: erster Vorschalt-Planetenradsatz, erster Planetenradsatz
- RS1a: erster Vorschalt-Planetenradsatz
- RS1b: zweiter Vorschalt-Planetenradsatz
- RS2: zweiter Vorschalt-Planetenradsatz, zweiter Planetenradsatz
- RS2a: dritter Vorschalt-Planetenradsatz
- RS2b: vierter Vorschalt-Planetenradsatz
- NS: Nachschalt-Planetenradsatz
- RS3: erster Nachschalt-Planetenradsatz, dritter Planetenradsatz
- RS4: zweiter Nachschalt-Planetenradsatz, vierter Planetenradsatz
- A - H: erstes bis achtes Schaltelement (Kupplung oder Bremse)
- n: Eingangsdrehzahl der Antriebswelle
- n1: Ausgangsdrehzahl des Planetenradsatzes RS1
- n1a: Ausgangsdrehzahl des Planetenradsatzes RS1a
- n1b: Ausgangsdrehzahl des Planetenradsatzes RS1b
- n2: Ausgangsdrehzahl des Planetenradsatzes RS2
- n2a: Ausgangsdrehzahl des Planetenradsatzes RS2a
- n2b: Ausgangsdrehzahl des Planetenradsatzes RS2b
- 1: Antriebswelle
- 2: Abtriebswelle
- 11: Sonnenrad des Radsatzes RS1
- 11a: Sonnenrad des Radsatzes RS1a

- 11b: Sonnenrad des Radsatzes RS1b
- 12: Planetenrad des Radsatzes RS1
- 12': inneres Planetenrad des Radsatzes RS1
- 12'': äußeres Planetenrad des Radsatzes RS1
- 12a: Planetenrad des Radsatzes RS1a
- 12a': inneres Planetenrad des Radsatzes RS1a
- 12a'': äußeres Planetenrad des Radsatzes RS1a
- 12b: Planetenrad des Radsatzes RS1b
- 12b': inneres Planetenrad des Radsatzes RS1b
- 12b'': äußeres Planetenrad des Radsatzes RS1b
- 13: Hohlrad des Radsatzes RS1
- 13a: Hohlrad des Radsatzes RS1a
- 13b: Hohlrad des Radsatzes RS1b
- 15: Steg des Radsatzes RS1
- 15': Steg der inneren Planetenräder des Radsatzes RS1
- 15'': Steg der äußeren Planetenräder des Radsatzes RS1
- 15a: Steg des Radsatzes RS1a
- 15a': Steg der inneren Planetenräder des Radsatzes RS1a
- 15a'': Steg der äußeren Planetenräder des Radsatzes RS1a
- 15b: Steg des Radsatzes RS1b
- 15b': Steg der inneren Planetenräder des Radsatzes RS1b
- 15b'': Steg der äußeren Planetenräder des Radsatzes RS1b
- 21: Sonnenrad des Radsatzes RS2
- 21a: Sonnenrad des Radsatzes RS2a
- 21b: Sonnenrad des Radsatzes RS2b
- 22: Planetenrad des Radsatzes RS2
- 22': inneres Planetenrad des Radsatzes RS2

- 22'': äußeres Planetenrad des Radsatzes RS2
- 22a: Planetenrad des Planetenradsatzes RS2a
- 22b: Planetenrad des Radsatzes RS2b
- 22b': inneres Planetenrad des Radsatzes RS2b
- 22b'': äußeres Planetenrad des Radsatzes RS2b
- 23: Hohlrad des Radsatzes RS2
- 23a: Hohlrad des Radsatzes RS2a
- 23b: Hohlrad des Radsatzes RS2b
- 25: Steg des Radsatzes RS2
- 25': Steg der inneren Planetenräder des Radsatzes RS2
- 25'': Steg der äußeren Planetenräder des Radsatzes RS2
- 25a: Steg des Radsatzes RS2a
- 25b: Steg des Radsatzes RS2b
- 25b': Steg der inneren Planetenräder des Radsatzes RS2b
- 25b'': Steg der äußeren Planetenräder des Radsatzes RS2b
- 31: Sonnenrad des Planetenradsatzes RS3
- 32: Planetenrad des Radsatzes RS3
- 32': inneres Planetenrad des Radsatzes RS3
- 32'': äußeres Planetenrad des Radsatzes RS3
- 33: Hohlrad des Radsatzes RS3
- 35: Steg des Radsatzes RS3
- 35': Steg der inneren Planetenräder des Radsatzes RS3
- 35'': Steg der äußeren Planetenräder des Radsatzes RS3
- 41: Sonnenrad des Radsatzes RS4
- 42: Planetenrad des Radsatzes RS4
- 43: Hohlrad des Radsatzes RS4
- 45: Steg des Radsatzes RS4

## Patentansprüche

1. Mehrstufengetriebe, mit einer Antriebswelle (1), die mit einem Vorschaltradsatz (VS) verbunden ist, mit einer Abtriebswelle (2), die mit einem aus zwei schaltbaren, gekoppelten Planetenradsätzen (RS3, RS4) bestehenden Nachschaltsatz (NS) verbunden ist, und mit Schaltelementen (A bis H), wobei durch wahlweises Schalten der Schaltelemente (A bis H) die Drehzahl der Antriebswelle (1) und die Drehzahl des Vorschaltradsatzes (VS) selektiv auf den Nachschaltradsatz (NS) zur Schaltung von Gängen übertragbar sind, **dadurch gekennzeichnet, daß** der Vorschaltradsatz (VS) aus zwei nicht schaltbaren, gekoppelten Planetenradsätzen (RS1, RS2) gebildet wird, wobei die beiden Planetenradsätze (RS1, RS2) ausgangsseitig zwei Drehzahlen (n1, n2) erzeugen, die neben der Eingangsdrehzahl (n) der Antriebswelle (1) wahlweise auf mindestens einen der zwei auf die Abtriebswelle (2) wirkenden schaltbaren Planetenradsätze (RS3, RS4) des Nachschaltradsatzes (NS) durch selektives Schließen der Schaltelemente (A bis F) derart schaltbar sind, daß zum Umschalten von einem Gang in den nächstfolgenden höheren oder niedrigeren Gang von den beiden gerade betätigten Schaltelementen jeweils nur ein Schaltelement abgeschaltet und ein weiteres Schaltelement zugeschaltet wird, und daß mindestens sieben Vorwärtsgänge gebildet werden.

2. Mehrstufengetriebe nach Anspruch 1, **dadurch gekennzeichnet, daß** die Anzahl der Vorwärtsgänge mindestens um Zwei größer ist als die Anzahl der Schaltelemente (A bis F).

3. Mehrstufengetriebe nach Anspruch 1 oder 2, **dadurch gekennzeichnet, daß** als Vorschaltradsatz (VS) ein erster Planetenradsatz (RS1) und ein zweiter Planetenradsatz (RS2) vorgesehen sind, die ein nicht schaltbares Zweisteg-Vierwellen-Getriebe bilden, wobei mindestens eine Welle mit der Eingangsdrehzahl (n) der Antriebswelle (1) läuft und eine weitere Welle festgesetzt ist, und daß der schaltbare Nachschaltradsatz (NS) ein schaltbares Zweigsteg-Vierwellen-Getriebe ist, das einen dritten Planetenradsatz (RS3) und einen vierten Planetenradsatz (RS4) umfaßt.

4. Mehrstufengetriebe nach Anspruch 1, 2 oder 3, **dadurch gekennzeichnet, daß** das Sonnenrad (11) des ersten Planetenradsatzes (RS1) und das Sonnenrad (21) des zweiten Planetenradsatzes (RS2) auf der Antriebswelle (1) angeordnet sind, daß das Hohlrad (13) des ersten Planetenradsatzes (RS1) festgesetzt ist und daß der Steg (15) der Planetenräder (12) des ersten Planetenradsatzes(RS1) mit dem Steg (25) der Planetenräder (22) des zweiten Planetenradsatzes (RS2) verbunden ist, daß das Hohlrad (23) des zweiten Planetenradsatzes (RS2) über ein viertes Schaltelement (D) mit dem Hohlrad (33) des dritten Planetenradsatzes (RS3) verbindbar ist, daß das Hohlrad (33) des dritten Planetenradsatzes (RS3) mit dem Steg (45) der Planetenräder (42) des vierten Planetenradsatzes (RS4) verbunden ist, daß der Steg (15) des ersten Planetenradsatzes (RS1) über ein erstes Schaltelement (A) mit dem Sonnenrad (31) des dritten Planetenradsatzes (RS3) verbindbar ist, daß der Steg (25) des zweiten Planetenradsatzes (RS2) über ein drittes Schaltelement (C) mit dem Sonnenrad (41) des vierten Planetenradsatzeses (RS4) verbindbar ist, daß der Steg (35) der Planetenräder (32) des dritten Planetenradsatzes (RS3) mit dem Hohlrad (43) des vierten Planetenradsatzes (RS4) und mit der Abtriebswelle (2) verbunden ist, daß die Antriebswelle (1) über ein zweites Schaltelement (B) mit dem Sonnenrad (41) des vierten Planetenradsatzes (RS4) und über ein fünftes Schaltelement (E) mit dem Steg (45) des vierten Planetenradsatzes (RS4) verbindbar ist (Figur 1A).

5. Mehrstufengetriebe nach Anspruch 1, 2 oder 3, **dadurch gekennzeichnet, daß** die Antriebswelle (1) mit dem Sonnenrad (11) des ersten Planetenradsatzes (RS1) und dem Hohlrad (21) des zweiten Planetenradsatzes (RS2) verbunden ist, daß der Steg (25) der Planetenräder (22) des zweiten Planetenradsatzes (RS2) festgesetzt ist und mit dem Hohlrad (13) des ersten Planetenradsatzes (RS1) verbunden ist, daß die Antriebswelle (1) über ein erstes Schaltelement (A) mit dem Sonnenrad (31) des dritten Planetenradsatzes (RS3) verbindbar ist und über ein fünftes Schaltelement (E) mit dem Steg (45) der Planetenräder (42) des vierten Planetenradsatzes (RS4) verbindbar ist, daß der Steg (45) des vierten Planetenradsatzes (RS4) mit dem Hohlrad (33) des dritten Planetenradsatzes (RS3) verbunden ist, daß der Steg (45) des vierten Planetenradsatzes (RS4) und das hiermit verbundene Hohlrad (33) des dritten Planetenradsatzes (RS3) durch viertes Schaltelement (D) festsetzbar sind, daß das Hohlrad (23) des zweiten Planetenradsatzes (RS2) durch ein drittes Schaltelement (C) mit dem Sonnenrad (41) des vierten Planetenradsatzes (RS4) verbindbar ist, daß der Steg (15) der Planetenräder (12) des ersten Planetenradsatzes (RS1) durch ein zweites Schaltelement (B) mit dem Sonnenrad (41) des vierten Planetenradsatzes (RS4) verbindbar ist und daß das Hohlrad (42) des vierten Planetenradsatzes (RS4) mit dem Steg (35) der Planetenräder (32) des dritten Planetenradsatzes (RS3) und mit der Abtriebswelle (2) verbunden ist (Fig. 2A).

6. Mehrstufengetriebe nach Anspruch 1, 2 oder 3, **dadurch gekennzeichnet, daß** die Antriebswelle (1) mit dem Sonnenrad (11) des ersten Planetenradsatzes (RS1) verbunden ist, daß der Steg (15) der Planetenräder (12) des ersten Planetenradsatzes (RS1) mit dem Steg (25'') der äußeren Planetenräder (22'') und dem Steg (25') der inneren Planetenräder (22') des zweiten Planetenradsatzes (RS2) verbunden ist, daß die Planetenräder (12) des ersten Planetenradsatzes (RS1) mit den äußeren Planetenrädern (22') des zweiten Planetenradsatzes (RS2) gekoppelt sind, daß das Hohlrad (13) des ersten Planetenradsatzes (RS1) mit dem Hohlrad (23) des zweiten Planetenradsatzes (RS2) verbunden ist, daß das Hohlrad (13) des ersten Planetenradsatzes (RS1) festgesetzt ist, daß der Steg (35'') der äußeren Planetenräder (32'') des dritten Planetenradsatzes (RS3) mit dem Steg (35') der inneren Planetenräder (32') des dritten Planetenradsates (RS3) und mit dem Steg (45) der Planetenräder (42) des vierten Planetenradsatzes (RS4) verbunden ist, daß beide Stege (35', 35'') des dritten Planetenradsatzes (RS3) und der damit verbundene Steg (45) des vierten Planetenradsatzes (RS4) durch ein viertes Schaltelement (D) festsetzbar sind, daß die Antriebswelle (1) durch ein erstes Schaltelement (A) mit dem Sonnenrad (31) des dritten Planetenradsatzes (RS3) verbindbar ist, daß die Antriebswelle (1) durch ein fünftes Schaltelement (E) mit den Stegen (35', 35") des dritten Planetenradsatzes (RS3) und dem damit verbundenen Steg (45) des vierten Planetenradsatzes (RS4) verbindbar ist, daß die Planetenräder (42) des vierten Planetenradsatzes (RS4) mit den äußeren Planetenrädern (32'') des dritten Planetenradsatzes (RS3) gekoppelt sind, daß das Sonnenrad (21) des zweiten Planetenradsatzes (RS2) durch ein drittes Schaltelement (C) mit dem Sonnenrad (41) des vierten Planetenradsatzes (RS4) verbindbar ist, daß der Steg (15) des ersten Planetenradsatzes (RS1) und die beiden damit verbundenen Stege (25', 25'') des zweiten Planetenradsatzes (RS2) über ein zweites Schaltelement (B) mit dem Sonnenrad (41) des vierten Planetenradsatzes (RS4) verbindbar ist und daß das Hohlrad (33) des dritten Planetenradsatzes (RS3) und das daran gekoppelte Hohlrad (43) des vierten Planetenradsatzes (RS4) mit der Abtriebswelle (1) verbunden sind (Fig. 3A).

7. Mehrstufengetriebe nach Anspruch 1, 2 oder 3, **dadurch gekennzeichnet, daß** die Planetenräder (12) des ersten Planetenradsatzes (RS1) an die Planetenräder (22) des zweiten Planetenradsatzes (RS2) gekoppelt sind, dass das Sonnenrad (11) des ersten Planetenradsatzes (RS1) festgesetzt ist, daß der Steg (15) der Planetenräder (12) des ersten Planetenradsatzes (RS1) und der Steg (25) der Planetenräder (22) des zweiten Planetenradsatzes (RS2) miteinander verbunden sind, daß die Antriebswelle (1) mit dem Hohlrad (13) des ersten Planetenradsatzes (RS1) und dem Hohlrad (23) des zweiten Planetenradsatzes verbunden ist, daß das Sonnenrad (21) des zweiten Planetenradsatzes (RS2) über ein viertes Schaltelement (D) mit dem Steg (45) der Sonnenräder (42) des vierten Planetenradsatzes (RS4) verbindbar ist, daß der Steg (15) des ersten Planetenradsatzes (RS1) und der damit verbundene Steg (25) des zweiten Planetenradsatzes (RS2) über ein drittes Schaltelement (C) mit dem Hohlrad (43) des vierten Planetenradsatzes (RS4) verbindbar ist, daß die Antriebswelle (1) über ein zweites Schaltelement (B) mit dem Hohlrad (43) des vierten Planetenradsatzes (RS4) verbindbar ist, daß die Antriebswelle (1) über ein fünftes Schaltelement (E) mit dem Hohlrad (33) des dritten Planetenradsatzes (RS3) verbindbar ist, daß das Hohlrad (33) des dritten Planetenradsatzes (RS3) mit dem Steg (45) des vierten Planetenradsatzes (RS4) verbunden ist, daß der Steg (35) der Planetenräder (32) des dritten Planetenradsatzes (RS3) mit der Abtriebswelle (2) verbunden ist und daß das Sonnenrad (31) des dritten Planetenradsatzes (RS3) und (41) des vierten Planetenradsatzes (RS4) miteinander verbunden sind und über ein erstes Schaltelement (A) festsetzbar sind (Figur 4A).

8. Mehrstufengetriebe nach Anspruch 1, 2 oder 3, **dadurch gekennzeichnet, daß** die Antriebswelle (1) mit dem Sonnenrad (11) des ersten Planetenradsatzes (RS1) verbunden ist, daß das Sonnenrad (11) des ersten Planetenradsatzes (RS1) mit dem Sonnenrad (21) des zweiten Planetenradsatzes (RS2) verbunden ist, daß das Hohlrad (11) des ersten Planetenradsatzes (RS1) festgesetzt ist, daß der Steg (15) der Planetenräder (12) des ersten Planetenradsatzes (RS1) mit dem Steg (25) der Planetenräder (22) des zweiten Planetenradsatzes (RS2) verbunden ist, daß das Hohlrad (23) des zweiten Planetenradsatzes (RS2) über ein viertes Schaltelement (D) mit dem Steg (45) des vierten Planetenradsatzes (RS4) verbindbar ist, daß der Steg (45) des vierten Planetenradsatzes (RS4) mit dem Hohlrad (33) des dritten Planetenradsatzes (RS3) verbunden ist, daß die Antriebswelle (1) über ein erstes Schaltelement (A) mit dem Sonnenrad (31) des dritten Planetenradsatzes (RS3) und dem damit verbundenen Sonnenrad (41) des vierten Planetenradsatzes (RS4) verbunden ist, daß die Antriebswelle (1) über ein fünftes Schaltelement (E) mit dem Steg (45) des vierten Planetenradsatzes (RS4) und dem damit verbundenen Hohlrad (33) des dritten Planetenradsatzes (RS3) verbindbar ist, daß der Steg (15) des ersten Planetenradsatzes (RS1) und der damit verbundene Steg (25) des zweiten Planetenradsatzes (RS2) über ein zweites Schaltelement (B) mit dem Hohlrad (43) des vierten Planetenradsatzes (RS4) verbindbar ist, daß das Hohlrad (43) des vierten Planetenradsatzes (RS4) durch ein drittes Schaltelement (C) festsetzbar ist, und daß der Steg (35) der Planetenräder (32) des dritten Planetenradsatzes (RS3) mit der Abtriebswelle (2) verbunden ist (Figur 5A).

9. Mehrstufengetriebe nach Anspruch 1, 2 oder 3, **dadurch gekennzeichnet, daß** die Antriebswelle (1) mit dem Hohlrad (13) des ersten Planetenradsatzes (RS1) verbunden ist, daß das Hohlrad (13) des ersten Planetenradsatzes (RS1) mit dem Hohlrad (23) des zweiten Planetenradsatzes (RS2) verbunden ist, daß das Sonnenrad (11) des ersten Planetenradsatzes (RS1) festgesetzt ist, daß der Steg (15) der Planetenräder (12) des ersten Planetenradsatzes (RS1) mit dem Steg (25) der Planetenräder (22) des zweiten Planetenradsatzes (RS2) verbunden ist, daß das Sonnenrad (21) des zweiten Planetenradsatzes (RS2) über ein viertes Schaltelement (D) mit dem Steg (35') der inneren Planetenräder (32') des dritten Planetenradsatzes (RS3) verbindbar ist, daß der Steg (35') der inneren Planetenräder (32') des dritten Planetenradsatzes (RS3) mit dem Steg (35'') der äußeren Planetenräder (32'') des dritten Planetenradsatzes (RS3) verbunden ist, daß die äußeren Planetenräder (32'') des dritten Planetenradsatzes (RS3) an die Planetenräder (42) des vierten Planetenradsatzes (RS4) gekoppelt sind, daß der Steg (25) des zweiten Planetenradsatzes (RS2) über ein erstes Schaltelement (A) mit dem Sonnenrad (31) des dritten Planetenradsatzes (RS3) verbindbar ist, daß die Antriebswelle (1) über ein fünftes Schaltelement (E) mit dem Steg (35') und dem Steg (35'') des dritten Planetenradsatzes (RS3) verbindbar ist, daß das Sonnenrad (21) des zweiten Planetenradsatzes (RS2) über ein sechstes Schaltelement (F) mit dem Sonnenrad (41) des vierten Planetenradsatzes (RS4) verbindbar ist, daß der Steg (15) des ersten Planetenradsatzes (RS1) und der Steg (25) des zweiten Planetenradsatzes (RS2) über ein zweites Schaltelement (B) mit dem Sonnenrad (41) des vierten Planetenradsatzes (RS4) verbindbar sind, daß das Sonnenrad (41) des vierten Planetenradsatzes (RS4) über ein drittes Schaltelement (C) festsetzbar ist, daß das Hohlrad (33) des dritten Planetenradsatzes (RS3) mit dem Hohlrad (43) des vierten Planetenradsatzes (RS4) und mit der Abtriebswelle (2) verbunden ist (Figur 6A).

10. Mehrstufengetriebe nach Anspruch 1, 2 oder 3, **dadurch gekennzeichnet, daß** die Antriebswelle (1) mit dem Hohlrad (13) des ersten Planetenradsatzes (RS1) verbunden ist, daß der Steg (15) der Planetenräder (12) des ersten Planetenradsatzes (RS1) mit dem Steg (25) der Planetenräder (22) des zweiten Planetenradsatzes (RS2) verbunden ist, daß das Hohlrad (13) des ersten Planetenradsatzes (RS1) mit dem Hohlrad (23) des zweiten Planetenradsatzes (RS2) verbunden ist, daß das Sonnenrad (11) des ersten Planetenradsatzes (RS1) festgesetzt ist, daß die Antriebswelle (1) über ein fünftes Schaltelement (E) mit dem Steg (45) der Planetenräder (42) des vierten Planetenradsatzes (RS4) verbindbar ist, der mit dem Hohlrad (33) des dritten Planetenradsatzes (RS3) verbunden ist, daß die Antriebswelle (1) über ein zweites Schaltelement (B) mit dem Sonnenrad (41) des vierten Planetenradsatzes (RS4) verbindbar ist, daß der Steg (15) des ersten Planetenradsatzes (RS1) und der Steg (25) des zweiten Planetenradsatzes (RS2) über ein erstes Schaltelement (A) mit dem Sonnenrad (31) des dritten Planetenradsatzes (RS3) verbindbar sind und über ein sechstes Schaltelement (F) mit dem Sonnenrad (41) des vierten Planetenradsatzes (RS4) verbindbar sind, daß das Sonnenrad (21) des zweiten Planetenradsatzes (RS2) über ein drittes Schaltelement (C) mit dem Sonnenrad (41) des vierten Planetenradsatzes (RS4) verbindbar ist und über ein viertes Schaltelement (D) mit dem Steg (45) des vierten Planetenradsatzes (RS4) und dem Hohlrad (33) des dritten Planetenradsatzes (RS3) verbindbar ist und daß das Hohlrad (43) des vierten Planetenradsatzes (RS4) mit dem Steg (35) der Planetenräder (32) des dritten Planetenradsatzes (RS3) und mit der Abtriebswelle (2) verbunden ist (Fig. 7A).

11. Mehrstufengetriebe nach Anspruch 1, 2 oder 3, **dadurch gekennzeichnet, daß** die Antriebswelle (1) mit dem Sonnenrad (21) des zweiten Planetenradsatzes (RS2) und mit dem Steg (15') der inneren Planetenräder (12') des ersten Planetenradsatzes (RS1) verbunden ist, daß der Steg (15') der inneren Planetenräder (12') des ersten Planetenradsatzes (RS1) mit dem Steg (15'') der äußeren Planetenräder (12'') des ersten Planetenradsatzes (RS1) verbunden ist, daß der Steg (25) der Planetenräder (22) des zweiten Planetenradsatzes (RS2) festgesetzt und mit dem Sonnenrad (11) des ersten Planetenradsatzes (RS1) verbunden ist, daß die Antriebswelle (1) über ein erstes Schaltelement (A) mit dem Sonnenrad (31) des dritten Planetenradsatzes (RS3) verbindbar ist, daß das Hohlrad (23) des zweiten Planetenradsatzes (RS2) über ein drittes Schaltelement (C) mit dem Sonnenrad (41) des vierten Planetenradsatzes (RS4) verbindbar ist, daß das Hohlrad (13) des ersten Planetenradsatzes (RS1) über ein zweites Schaltelement (B) mit dem Sonnenrad (41) des vierten Planetenradsatzes (RS4) verbindbar ist, daß die Antriebswelle (1) über ein fünftes Schaltelement (E) mit dem Steg (45) der Planetenräder (42) des vierten Planetenradsatzes (RS4) verbindbar ist, daß der Steg (45) des vierten Planetenradsatzes (RS4) mit dem Hohlrad (33) des dritten Planetenradsatzes (RS3) verbunden ist und über ein viertes Schaltelement (D) festsetzbar ist, daß das Sonnenrad (41) des vierten Planetenradsatzes (RS4) über ein sechstes Schaltelement (F) festsetzbar ist, und daß das Hohlrad (43) des vierten Planetenradsatzes (RS4) mit dem Steg (35) der Planetenräder (32) des dritten Planetenradsatzes (RS3) und mit der Abtriebswelle (2) verbunden ist (Figur 8A).

12. Mehrstufengetriebe nach Anspruch 1, 2 oder 3, **dadurch gekennzeichnet, daß** die Antriebswelle (1) mit dem Sonnenrad (21) des zweiten Planetenradsatzes (RS2) verbunden ist, daß die äußeren Planetenräder (22'') des zweiten Planetenradsatzes (RS2) mit den Planetenrädern (12) des ersten Planetenradsatzes (RS1) gekoppelt sind, daß das Sonnenrad (11) des ersten Planetenradsatzes (RS1) festgesetzt ist, daß die Antriebswelle (1) über ein zweites Schaltelement (B) mit dem Sonnenrad (41) des vierten Planetenradsatzes (RS4) verbindbar ist und über ein fünftes Schaltelement (E) mit dem Steg (45) der Planetenräder (42) des vierten Planetenradsatzes (RS4) verbindbar ist, der mit dem Hohlrad (33) des dritten Planetenradsatzes (RS3) verbunden ist, daß der den äußeren Planetenrädern (22'') des zweiten Planetenradsatzes (RS2) und den Planetenrädern (12) des ersten Planetenradsatzes (RS1) gemeinsame Steg (15) mit dem Steg (25') der inneren Planetenräder (22') des zweiten Planetenradsatzes (RS2) verbunden ist und über ein sechstes Schaltelement (F) mit dem Sonnenrad (41) des vierten Planetenradsatzes (RS4) verbindbar ist, daß das Hohlrad (13) des ersten Planetenradsatzes (RS1) mit dem Hohlrad (23) des zweiten Planetenradsatzes (RS2) verbunden ist und über ein viertes Schaltelement (D) mit dem Steg (45) des vierten Planetenradsatzes (RS4) verbindbar ist und über ein drittes Schaltelement (C) mit dem Sonnenrad (41) des vierten Planetenradsatzes (RS4) verbindbar ist, daß der den äußeren Planetenrädern (22') des zweiten Planetenradsatzes (RS2) und den Planetenrädern (12) des ersten Planetenradsatzes (RS1) gemeinsame Steg (15) über ein erstes Schaltelement (A) mit dem Sonnenrad (31) des dritten Planetenradsatzes (RS3) verbindbar ist, und daß das Hohlrad (43) des vierten Planetenradsatzes (RS4) mit dem Steg (35) der Sonnenräder (32) des dritten Planetenradsatzes (RS3) und der Abtriebswelle (2) verbunden ist (Figur 15A).

13. Mehrstufengetriebe nach dem Oberbegriff von Anspruch 1, **dadurch gekennzeichnet, daß** der Vorschaltradsatz (VS) aus drei nicht schaltbaren, gekoppelten Planetenradsätzen (RS1, RS2a, RS2b) gebildet wird, wobei die drei Planetenradsätze (RS1, RS2a, RS2b) ausgangsseitig drei Drehzahlen (n1, n2a, n2b) erzeugen, die neben der Eingangsdrehzahl (n) der Antriebswelle (1) wahlweise auf mindestens einen der zwei auf die Abtriebswelle (2) wirkenden schaltbaren Planetenradsätzen (RS3, RS4) des Nachschaltradsatzes (NS) durch selektives Schließen der Schaltelemente (A bis G) derart schaltbar sind, daß zum Umschalten von einem Gang in den nächstfolgenden hinteren oder niedrigeren Gang von den beiden gerade betätigten Schaltelementen jeweils nur ein Schaltelement abgeschaltet und ein weiteres Schaltelement zugeschaltet wird, und daß mindestens sieben Vorwärtsgänge gebildet werden.

14. Mehrstufengetriebe nach Anspruch 13, **dadurch gekennzeichnet, daß** die Anzahl der Vorwärtsgänge mindestens um Zwei größer ist als die Anzahl der Schaltelemente (A bis G).

15. Mehrstufengetriebe nach Anspruch 13 oder 14, **dadurch gekennzeichnet, daß** als Vorschaltradsatz (VS) ein erster Vorschalt-Planetenradsatz (RS1), ein zweiter Vorschalt-Planetenradsatz (RS2a) und ein dritter Vorschalt-Planetenradsatz (RS2b) vorgesehen sind, die ein nicht schaltbares Dreisteg-Fünfwellen-Getriebe bilden, wobei mindestens eine Welle mit der Eingangsdrehzahl (n) der Antriebswelle (1) läuft und mindestens eine weitere Welle festgesetzt ist, und daß das schaltbare Nachschaltgetriebe (NS) ein schaltbares Zweisteg-Vierwellen-Getriebe ist, das einen ersten Nachschalt-Planetenradsatz (RS3) und einen zweiten Nachschalt-Planetenradsatz (RS4) umfaßt.

16. Mehrstufengetriebe nach Anspruch 13, 14 oder 15, **dadurch gekennzeichnet, daß** der erste Vorschalt-Planetenradsatz (RS1) mit der Antriebswelle (11) verbunden ist, daß die äußeren Planetenräder (22b'') des dritten Vorschalt-Planetenradsatzes (RS2b) und die Planetenräder (22a) des zweiten Vorschalt-Planetenradsatzes (RS2a) miteinander gekoppelt sind, daß der den Planetenrädern (22a) des zweiten Vorschalt-Planetenradsatzes (RS2a) und den äußeren Planetenräder (22b'') des dritten Vorschalt-Planetenradsatzes (RS2b) gemeinsame Steg (25b'') mit dem Steg (25b') der inneren Planetenräder (22b') des dritten Vorschalt-Planetenradsatzes (RS2b) und mit dem Steg (15) der Planetenräder (12) des ersten Vorschalt-Planetenradsatzes (RS1) verbunden ist, daß das Hohlrad (13) des ersten Vorschalt-Planetenradsatzes (RS1) und das Sonnenrad (21b) des dritten Vorschalt-Planetenradsatzes (RS2b) festgesetzt sind, daß das Hohlrad (23a) des zweiten Vorschalt-Planeten-radsatzes (RS2a) und das Hohlrad (23b) des dritten Vorschalt-Planetenradsatzes (RS2b) über ein viertes Schaltelement (D) mit dem Steg (45) der Planetenräder (42) des zweiten Nachschalt-Planetenradsatzes (RS4) verbindbar ist, daß der Steg (45) des zweiten Nachschalt-Planetenrad-satzes (RS4) mit dem Hohlrd (33) des ersten Nachschalt-Planetenradsatzes (RS3) verbunden ist, daß das Hohlrad (23a) des zweiten Vorschalt-Planetenradsatzes (RS2a) und das Hohlrad (23b) des dritten Vorschalt-Planetenradsatzes (RS2b) über ein sechstes Schaltelement (F) mit dem Hohlrad (43) des zweiten Nachschalt-Planetenradsatzes (RS4) verbindbar ist, daß die Antriebswelle (1) über ein erstes Schaltelement (A) mit dem Sonnenrad (41) des zweiten Nachschalt-Planetenradsatzes (RS4) und dem damit verbundenen Sonnenrad (31) des ersten Nachschalt-Planetenradsatzes (RS3) verbindbar ist und über ein fünftes Schaltelement (E) mit dem Steg (45) des zweiten Nachschalt-Planetenradsatzes (RS4) verbindbar ist, daß das Hohlrad (43) des zweiten Nachschalt-Planetenradsatzes (RS4) über ein drittes Schaltelement (C) festsetzbar ist, das Sonnenrad (21a) des zweiten Vorschalt-Planerenradsatzes (RS2a) über ein zweites Schaltelement (B) mit dem Hohlrad (43) des zweiten Nachschalt-Planetenradsatzes (RS4) verbindbar ist, der den Planetenrädern (22a) des zweiten Vorschalt-Planetenradsatzes (RS2a) und den äußeren Planetenrädern (22b'') des dritten Vorschalt-Planetenradsatzes (RS2b) gemeinsame Steg (25b'') über ein siebtes Schaltelement (G) mit dem Hohlrad (43) des zweiten Nachschalt-Planetenradsatzes (RS4) verbindbar ist und der Steg (35) der Planetenräder (32) des ersten Nachschalt-Planetenrad-satzes (RS3) mit der Abtriebswelle (2) verbunden ist (Fig. 10A).

17. Mehrstufengetriebe nach dem Oberbegriff von Anspruch 1, **dadurch gekennzeichnet, daß** der Vorschaltradsatz (VS) aus mindestens vier nicht schaltbaren, gekoppelten Planetenradsätzen (RS1a, RS1b, RS2a, RS2b) gebildet wird, die ausgangsseitig vier Drehzahlen (n1a, n1b, n2a, n2b) erzeugen, die neben der Eingangsdrehzahl (n) der Antriebswelle (1) wahlweise auf mindestens einen der zwei auf die Abtriebswelle (2) wirkenden, schaltbaren Planetenradsätzen (RS3, RS4) des Nachschaltradsatzes (NS) durch selektives Schließen der Schaltelemente (A bis H) derart schaltbar sind, daß zum Umschalten von einem Gang in den nächstfolgenden höheren oder niedrigeren Gang von den beiden gerade betätigten Schaltelementen jeweils nur ein Schaltelement abgeschaltet und ein weiteres Schaltelement zugeschaltet wird, und daß mindestens sieben Vorwärtsgänge gebildet werden.

18. Mehrstufengetriebe nach Anspruch 17, **dadurch gekennzeichnet, daß** die Anzahl der Vorwärtsgänge mindestens um Zwei größer ist als die Anzahl der Schaltelemente (A bis H).

19. Mehrstufengetriebe nach Anspruch 17 oder 18, **dadurch gekennzeichnet, daß** als Vorschaltradsatz (VS) ein erster Vorschalt-Planetenradsatz (RS1a), ein zweiter Vorschalt-Planetenradsatz (RS1b), ein dritter Vorschalt-Planetenradsatz (RS2a) und ein vierter Vorschalt-Planetenradsatz (RS2b) vorgesehen sind, die ein nicht schaltbares Viersteg-Sechswellen-Getriebe bilden, wobei mindestens eine Welle mit der Eingangsdrehzahl (n) der Antriebswelle (1) läuft und mindestens eine weitere Welle festgesetzt ist, und daß das schaltbare Nachschaltgetriebe (NS) ein schaltbares Zweigsteg-Vierwellen-Getriebe ist, das einen ersten Nachschalt-Planetenradsatz (RS3) und einen zweiten Nachschalt-Planetenradsatz (RS4) umfaßt.

20. Mehrstufengetriebe nach Anspruch 17, 18 oder 19, **dadurch gekennzeichnet, daß** die Planetenräder (12a) des ersten Vorschalt-Planetenradsatzes (RS1a) an die äußeren Planetenräder (12b'') des zweiten Vorschalt-Planetenradsatzes (RS1b) gekoppelt sind, wobei der den Planetenrädern (12a) des ersten Vorschalt-Planetenradsatzes (RS1a) und den äußeren Planetenrädern (12b'') des zweiten Vorschalt-Planetenradsatzes (RS1b) gemeinsame Steg (15b'') mit dem Steg (15b') der inneren Planetenräder (12b') des zweiten Vorschalt-Planetenradsatzes (RS1b) verbunden ist, daß die Planetenräder (22a) des dritten Vorschalt-Planetenradsatzes (RS2a) an die äußeren Planetenräder (22b'') des vierten Vorschalt-Planetenradsatzes (RS2b) gekoppelt sind, wobei der den Planetenrädern (22a) des dritten Vorschalt-Planetenradsatzes (RS2a) und den äußeren Planetenrädern (22b'') des vierten Vorschalt-Planetenradsatzes (RS2b) gemeinsame Steg (25b'') mit dem Steg (25b') der inneren Planetenräder (22b') des vierten Vorschalt-Planetenradsatzes (RS2b) und mit dem den Planetenrädern (12a) des ersten Vorschalt-Planetenradsatzes (RS1a) und den äußeren Planetenräder (12b'') des zweiten Vorschalt-Planetenradsatzes (RS1b) gemeinsamen Steg (15b'') verbunden ist, daß die Antriebswelle (1) mit dem Sonnenrad (11b) des zweiten Vorschalt-Planetenradsatzes (RS1b) und mit dem Sonnenrad (21a) des dritten Vorschalt-Planetenradsatzes (RS2a) verbunden ist, daß das Sonnenrad (11a) des ersten Vorschalt-Planetenradsatzes (RS1a) festgesetzt ist, daß das Hohlrad (13a) des ersten Vorschalt-Planetenradsatzes (RS1a) mit dem Hohlrad (13b) des zweiten Vorschalt-Planetenradsatzes (RS1b) verbunden ist und über ein zweites Schaltelement (B) mit dem Sonnenrad (41) des zweiten Nachschalt-Planetenradsatzes (RS4) verbindbar ist, daß die Antriebswelle (1) über ein erstes Schaltelement (A) mit dem Sonnenrad (31) des ersten Nachschalt-Planetenradsatzes (RS3) verbindbar ist und über ein fünftes Schaltelement (E) mit dem Hohlrad (33) des ersten Nachschalt-Planetenradsatzes (RS3) verbindbar ist, das mit dem Steg (45) der Planetenräder (42) des zweiten Nachschalt-Planetenradsatzes (RS4) verbunden ist, daß das Sonnenrad (21b) des vierten Vorschalt-Planetenradsatzes (RS2b) über ein erstes Schaltelement (D) mit dem Hohlrad (33) des ersten Nachschalt-Planetenradsatzes (RS3) und dem Steg (45) des zweiten Nachschalt-Planetenradsatzes (RS4) verbindbar ist und über ein sechstes Schaltelement (F) mit dem Sonnenrad (41) des zweiten Nachschalt-Planetenradsatzes (RS4) verbindbar ist, daß der Steg (25b") der äußeren Planetenräder (22b'') des vierten Vorschalt-Planetenradsatzes (RS2b) über ein achtes Schaltelement (H) mit dem Sonnenrad (41) des zweiten Nachschalt-Planetenradsatzes (RS4) verbindbar ist, daß das Hohlrad (23a) des dritten Vorschalt-Planetenradsatzes (RS2a) mit dem Hohlrad (23b) des vierten Vorschalt-Planetenradsatzes (RS2b) verbunden ist und über ein siebtes Schaltelement (G) mit dem Sonnenrad (41) des zweiten Nachschalt-Planetenradsatzes (RS4) verbindbar ist, daß das Sonnenrad (41) des zweiten Nachschalt-Planetenradsatzes (RS4) über ein drittes Schaltelement (C) festsetzbar ist und daß der Steg (35) der Planetenräder (32) des ersten Nachschalt-Planetenradsatzes (RS3) mit dem Hohlrad (43) des zweiten Nachschalt-Planetenradsatzes (RS4) und mit der Abtriebswelle (2) verbunden ist (Fig. 11A).

21. Mehrstufengetriebe nach Anspruch 17, 18 oder 19, **dadurch gekennzeichnet, daß** die Antriebswelle (1) mit dem Sonnenrad (11a) des ersten Vorschalt-Pianetenradsatzes (RS1a) verbunden ist, daß die äußeren Planetenräder (12a'') des ersten Vorschalt-Planetenradsatzes (RS1a), die Planetenräder (12b) des zweiten Vorschalt-Planetenradsatzes (RS1b), die Planetenräder (22a) des dritten Vorschalt-Planetenradsatzes (RS2a) und die Planetenräder (22b) des vierten Vorschalt-Planetenradsatzes (RS2a) als Stufenplanet ausgebildet sind, daß der Steg (15a') der inneren Planetenräder (12a') des ersten Vorschalt-Planetenradsatzes (RS1a) mit dem Steg (15a'') der äußeren Planetenräder (12a'') des ersten Vorschalt-Planetenradsatzes (RS1a), dem Steg (15b) der Planetenräder (12b) des zweiten Vorschalt-Planetenradsatzes (RS1b),dem Steg (25a) der Planetenräder (22a) des dritten Vorschalt-Planetenradsatzes (RS2a) und dem Steg (25b) der Planetenräder (22b) des vierten Vorschalt-Planetenradsatzes (RS2b) verbunden ist und über ein siebtes Schaltelement (G) mit dem Sonnenrad (41) des zweiten Nachschalt-Planetenradsatzes (RS4) verbindbar ist, daß das Sonnenrad (11b) des zweiten Vorschalt-Planetenradsatzes (RS1b) festgesetzt ist, daß das Sonnenrad (41) des zweiten Nachschalt-Planetenradsatzes (RS4) über ein dritten Schaltelement (C) festsetzbar ist, daß das Hohlrad (23a) des dritten Vorschalt-Planetenradsatzes (RS2a) über ein achtes Schaltelement (H) mit dem Sonnenrad (41) des zweiten Nachschalt-Planetenradsatzes (RS4) verbindbar ist, daß die Antriebswelle (1) über ein erstes Schaltelement (A) mit dem Sonnenrad (31) des ersten Nachschalt-Planetenradsatzes (RS3) verbindbar ist, daß das Hohlrad (13a) des ersten Vorschalt-Planetenradsatzes (RS1a) und das Hohlrad (13b) des zweiten Vorschalt-Planetenradsatzes (RS1b) miteinander verbunden sind und über ein zweites Schaltelement (B) mit dem Sonnenrad (41) des zweiten Nachschalt-Planetenradsatzes (RS4) verbindbar sind, daß die verbundenen Stege (15a'', 15a') der äußeren und inneren Planetenräder (12a'', 12a') des ersten Vorschalt-Planetenradsatzes über ein viertes Schaltelement (D) mit dem Steg (35') der inneren Planetenräder (32') des ersten Nachschalt-Planetenradsatzes (RS3) verbindbar ist, daß die äußeren Planetenräder (32'') des ersten Nachschalt-Planetenradsatzes (RS3) und die Planetenräder (42) des zweiten Nachschalt-Planetenradsatzes (RS4) aneinander gekoppelt sind, daß der Steg (35'') der äußeren Planetenräder (32'') des ersten Nachschalt-Planetenradsatzes (RS3) mit dem Steg (35') der inneren Planetenräder (32') des ersten Nachschalt-Planetenradsatzes (RS3) und dem Steg (45) der Planetenräder (42) des zweiten Nachschalt-Planetenradsatzes (RS4) verbunden ist und durch ein fünftes Schaltelement (E) mit der Antriebswelle (1) verbindbar ist, daß das Sonnenrad (21b) des vierten Vorschalt-Planetenradsatzes (RS2b) über ein sechstes Schaltelement (F) mit dem Sonnenrad (41) des zweiten Nachschalt-Planetenradsatzes (RS4) verbindbar ist und daß das Hohlrad (33) des ersten Nachschalt-Planetenradsatzes (RS3) und das Hohlrad (43) des zweiten Nachschalt-Planetenradsatzes (RS4) gemeinsam mit der Abtriebswelle (2) verbunden ist (Fig. 16A).

## Claims

1. Multistage transmission with a drive shaft (1) linked to a front-mounted gear set (VS) and with an output shaft (2) linked to a rear-mounted gear set (NS) consisting of two controllable, coupled planetary gear sets (RS3, RS4), and with shifting components (A through H), whereby through optional actuation of the shifting components (A through H) the speed of the drive shaft (1) and the speed of the front-mounted gear set (VS) can be transmitted to the rear-mounted gear set (NS) for changing gears, **characterized in that** the front-mounted gear set (VS) consists of two non-controllable, coupled planetary gear sets (RS1, RS2), with the two planetary gear sets (RS1, RS2) producing two speeds (n1, n2) on the output side, which apart from the input speed (n) of the drive shaft (1) are optionally shiftable through selective closing of the shifting components (A through F) to at least one of the two controllable planetary gear sets (RS3, RS4) of the rear-mounted gear set (NS) acting on the output shaft (2), namely in a manner that changing up or down one gear involves only one of the two actuated shifting components being deactivated and another shifting component being activated and that at least seven forward speeds are produced.

2. Multistage transmission according to claim 1, **characterized in that** the number of forward speeds exceeds the number of shifting components (A through F) by at least two.

3. Multistage transmission according to claim 1 or 2, **characterized in that** a first planetary gear set (RS 1) and a second planetary gear set (RS2) are provided as a front-mounted gear set (VS) and constitute a non-controllable dual-spider four-shaft transmission, whereby at least one shaft runs at the input speed (n) of the drive shaft (1) and another shaft is fixed, and that the controllable rear-mounted gear set (NS) constitutes a controllable dual-spider four-shaft transmission, which comprises a third planetary gear set (RS3) and a fourth planetary gear set (RS4).

4. Multistage transmission according to claim 1, 2 or 3, **characterized in that** the sun gear (11) of the first planetary gear set (RS1) and the sun gear of the second planetary gear set (RS2) are arranged on the drive shaft (1); that the ring gear (13) of the first planetary gear set (RS1) is fixed and that the spider (15) of the planet gears (12) of the first planetary gear set (RS1) is linked to the spider (25) of the planet gears (22) of the second planetary gear set (RS2); that the ring gear (23) of the second planetary gear set (RS2) can be linked via a fourth shifting component (D) to the ring gear (33) of the third planetary gear set (RS3); that the ring gear (33) of the third planetary gear set (RS3) is linked to the spider (45) of the planetary gears (42) of the fourth planetary gear set (RS4); that the spider (15) of the first planetary gear set (RS 1) via a first shifting component (A) can be linked to the sun gear (31) of the third planetary gear set (RS3); that the spider (25) of the second planetary gear set (RS2) via a third shifting component (C) can be linked to the sun gear (41) of the fourth planetary gear set (RS4); that the spider (35) of the planetary gears (32) of the third planetary gear set (RS3) is linked to the ring gear (43) of the fourth planetary gear set (RS4) and to the output shaft (2); that the drive shaft (1) via a second shifting component (B) can be linked to the sun gear (41) of the fourth planetary gear set (RS4) and via a fifth shifting component (E) to the spider (45) of the fourth planetary gear set (RS4) [Fig. 1A].

5. Multistage transmission according to claim 1, 2 or 3, **characterized in that** the drive shaft (1) is linked to the sun gear (11) of the first planetary gear set (RS 1) and to the ring gear (21) of the second planetary gear set (RS2); that the spider (25) of the planetary gears (22) of the second planetary gear set (RS2) is fixed and linked to the ring gear (13) of the first planetary gear set (RS1); that the drive shaft (1) via a first shifting component (A) can be linked to the sun gear (31) of the third planetary gear set (RS3), and via a fifth shifting component (E) can be linked to the spider (45) of the planetary gears (42) of the fourth planetary gear set (RS4); that the spider (45) of the fourth planetary gear set (RS4) is linked to the ring gear (33) of the third planetary gear set (RS3); that the spider (45) of the fourth planetary gear set (RS4) and the ring gear (33) of the third planetary gear set (RS3) linked to it can be fixed by a fourth shifting component (D); that the ring gear (23) of the second planetary gear set (RS2) can be linked to the sun gear (41) of the fourth planetary gear set (RS4) via a third shifting component (C); that the spider (15) of the planetary gears (12) of the first planetary gear set (RS1) can be linked to the sun gear (41) of the fourth planetary gear set (RS4) via a second shifting component (B); and that the ring gear (42) of the fourth planetary gear set (RS4) is linked to the spider (35) of the planetary gears (32) of the third planetary gear set (RS3) and to the output shaft (2) [Fig. 2A].

6. Multistage transmission according to claim 1, 2 or 3, **characterized in that** the drive shaft (1) is linked to the sun gear (11) of the first planetary gear set (RS1); that the spider (15) of the planetary gears (12) of the first planetary gear set (RS1) is linked to the spider (25") of the outer planetary gears (22") and to the spider (25') of the inner planetary gears (22') of the second planetary gear set (RS2); that the planetary gears (12) of the first planetary gear set (RS1) are linked to the outer planetary gears (22') of the second planetary gear set (RS2); that the ring gear (13) of the first planetary gear set (RS 1) is linked to the ring gear (23) of the second planetary gear set (RS2); that the ring gear (13) of the first planetary gear set (RS1) is fixed; that the spider (35") of the outer planetary gears (32") of the third planetary gear set (RS3) is linked to the spider (35') of the inner planetary gears (32') of the third planetary gear set (RS3) and to the spider (45) of the planetary gears (42) of the fourth planetary gear set (RS4); that both spiders (35', 35") of the third planetary gear set (RS3) and the spider (45) of the fourth planetary gear set (RS4) linked to it are fixable through a fourth shifting component (D); that the drive shaft (1) through a fifth shifting component (E) can be linked to the spiders (35', 35") of the third planetary gear set (RS3) and to the spider (45) of the fourth planetary gear set (RS4) linked to it; that the planetary gears (42) of the fourth planetary gear set (RS4) are linked to the outer planetary gears (32") of the third planetary gear set(RS3); that the sun gear (21) of the second planetary gear set (RS2) through a third shifting component (C) can be linked to the sun gear (41) of the fourth planetary gear set (RS4); that the spider (15) of the first planetary gear set (RS1) and the two spiders (25', 25") of the second planetary gear set (RS2) through a second shifting component (B) can be linked to the sun gear (41) of the fourth planetary gear set (RS4); and that the ring gear (33) of the third planetary gear set (RS3) and the ring gear (43) of the fourth planetary gear set (RS4) linked to it are linked to the drive shaft (1) [Fig. 3A].

7. Multistage transmission according to claim 1, 2 or 3, **characterized in that** the planetary gears (12) of the first planetary gear set (RS1) are linked to the planetary gears (22) of the second planetary gear set (RS2); that the sun gear (11) of the first planetary gear set (RS1) is fixed; that the spider (15) of the planetary gears (12) of the first planetary gear set (RS1) and the spider (25) of the planetary gears (22) of the second planetary gear set (RS2) are linked to each other; that the drive shaft (1) is linked to the ring gear (13) of the first planetary gear set (RS1) and to the ring gear (23) of the second planetary gear set; that the sun gear (21) of the second planetary gear set (RS2) through a fourth shifting component (D) can be linked to the spider (45) of the sun gears (42) of the fourth planetary gear set (RS4); that the spider (15) of the first planetary gear set (RS 1) and the spider (25) of the second planetary gear set (RS2) linked to it can be linked to the ring gear (43) of the fourth planetary gear set (RS4) via a third shifting component (C); that the drive shaft (1) can be linked to the ring gear (43) of the fourth planetary gear set (RS4) via a second shifting component (B); that the drive shaft (1) can be linked to the ring gear (33) of the third planetary gear set (RS3) via a fifth shifting component (E); that the ring gear (33) of the third planetary gear set (RS3) is linked to the spider (45) of the fourth planetary gear set (RS4); that the spider (35) of the planetary gears (32) of the third planetary gear set (RS3) is linked to the output shaft (2); and that the sun gear (31) of the third planetary gear set (RS3) and (41) of the fourth planetary gear set (RS4) are linked to each other and can be fixed via a first shifting component (A) [Fig. 4A].

8. Multistage transmission according to claim 1, 2 or 3, **characterized in that** the drive shaft (1) is linked to the sun gear (11) of the first planetary gear set (RS1); that the sun gear (11) of the first planetary gear set (RS 1) is linked to the sun gear (21) of the second planetary gear set (RS2); that the ring gear (11) of the first planetary gear set (RS1) is fixed; that the spider (15) of the planetary gears (12) of the first planetary gear set (RS1) is linked to the spider (25) of the planetary gears (22) of the second planetary gear set (RS2); that the ring gear (23) of the second planetary gear set (RS2) can be linked to the spider (45) of the fourth planetary gear set (RS4) via a fourth shifting component (D); that the spider (45) of the fourth planetary gear set (RS4) is linked to the ring gear (33) of the third planetary gear set (RS3); that the drive shaft (1) via a first shifting component (A) is linked to the sun gear (31) of the third planetary gear set (RS3) and the sun gear (41) of the fourth planetary gear set (RS4) linked to it; that the drive shaft (1) via a fifth shifting component (E) can be linked to the spider (45) of the fourth planetary gear set (RS4) and the ring gear (33) of the third planetary gear set (RS3) linked to it; that the spider (15) of the first planetary gear set (RS1) and the spider (25) of the second planetary gear set (RS2) linked to it can be linked to the ring gear (43) of the fourth planetary gear set (RS4) via a second shifting component (B); that the ring gear (43) of the fourth planetary gear set (RS4) can be fixed via a third shifting component (C); and that the spider (35) of the planetary gears (32) of the third planetary gear set (RS3) is linked to the output shaft (2) [Fig. 5A].

9. Multistage transmission according to claim 1, 2 or 3 **characterized in that** the drive shaft (1) is linked to the ring gear (13) of the first planetary gear set (RS1); that the ring gear (13) of the first planetary gear set (RS1) is linked to the ring gear (23) of the second planetary gear set (RS2); that the sun gear (11) of the first planetary gear set (RS 1) is fixed; that the spider (15) of the planetary gears (12) of the first planetary gear set (RS1) is linked to the spider (25) of the planetary gears (22) of the second planetary gear set (RS2); that the sun gear (21) of the second planetary gear set (RS2) can be linked to the spider (35') of the inner planetary gears (32') of the third planetary gear set (RS3) via a fourth shifting component (D); that the spider (35') of the inner planetary gears (32') of the third planetary gear set (RS3) is linked to the spider (35") of the outer planetary gears (32") of the third planetary gear set (RS3); that the outer planetary gears (32") of the third planetary gear set (RS3) are linked to the planetary gears (42) of the fourth planetary gear set (RS4); that the spider (25) of the second planetary gear set (RS2) can be linked to the sun gear (31) of the third planetary gear set (RS3) via a first shifting component (A); that the drive shaft (1) can be linked to the spider (35') and the spider (35") of the third planetary gear set (RS3) via a fifth shifting component (E); that the sun gear (21) of the second planetary gear set (RS2) can be linked to the sun gear (41) of the fourth planetary gear set (RS4) via a sixth shifting component (F); that the spider (15) of the first planetary gear set (RS1) and the spider (25) of the second planetary gear set (RS2) can be linked to the sun gear (41) of the fourth planetary gear set (RS4) via a second shifting component (B); that the sun gear (41) of the fourth planetary gear set (RS4) can be fixed via a third shifting component (C); that the ring gear (33) of the third planetary gear set (RS3) is linked to the ring gear (43) of the fourth planetary gear set (RS4) and to the output shaft (2) [Fig. 6A].

10. Multistage transmission according to claim 1, 2 or 3 **characterized in that** the drive shaft (1) is linked to the ring gear (13) of the first planetary gear set (RS1); that the spider (15) of the planetary gears (12) of the first planetary gear set (RS1) is linked to the spider (25) of the planetary gears (22) of the second planetary gear set (RS2); that the ring gear (13) of the first planetary gear set (RS1) is linked to the ring gear (23) of the second planetary gear set (RS2); that the sun gear (11) of the first planetary gear set (RS 1) is fixed; that the drive shaft (1) can be linked to the spider (45) of the planetary gears (42) of the fourth planetary gear set (RS4) via a fifth shifting component (E), which is linked to the ring gear (33) of the third planetary gear set (RS3); that the drive shaft (1) can be linked to the sun gear (41) of the fourth planetary gear set (RS4) via a second shifting component (B); that the spider (15) of the first planetary gear set (RS 1) and the spider (25) of the second planetary gear set (RS2) can be linked to the sun gear (31) of the third planetary gear set (RS3) via a first shifting component (A) and to the sun gear (41) of the fourth planetary gear set (RS4) via a sixth shifting component (F); that the sun gear (21) of the second planetary gear set (RS2) can be linked to the sun gear (41) of the fourth planetary gear set (RS4) via a third shifting component (C) and to the spider (45) of the fourth planetary gear set (RS4) and the ring gear (33) of the third planetary gear set (RS3) via a fourth shifting component (D); and that the ring gear (43) of the fourth planetary gear set (RS4) is linked to the spider (35) of the planetary gears (32) of the third planetary gear set (RS3) and to the output shaft (2) [Fig. 7A].

11. Multistage transmission according to claim 1, 2 or 3, **characterized in that** the drive shaft (1) is linked to the sun gear (21) of the second planetary gear set (RS2) and to the spider (15') of the inner planetary gears (12') of the first planetary gear set (RS1); that the spider (15') of the inner planetary gears (12') of the first planetary gear set (RS1) is linked to the spider (15") of the outer planetary gears (12") of the first planetary gear set (RS 1); that the spider (25) of the planetary gears (22) of the second planetary gear set (RS2) is fixed and linked to the sun gear (11) of the first planetary gear set (RS 1); that the drive shaft (1) can be linked to the sun gear (31) of the third planetary gear set (RS3) via a first shifting component (A); that the ring gear (23) of the second planetary gear set (RS2) can be linked to the sun gear (41) of the fourth planetary gear set (RS4) via a third shifting component (C); that the ring gear (13) of the first planetary gear set (RS 1) can be linked to the sun gear (41) of the fourth planetary gear set (RS4) via a second shifting component (B); that the drive shaft (1) can be linked to the spider (45) of the planetary gears (42) of the fourth planetary gear set (RS4) via a fifth shifting component (E); that the spider (45) of the fourth planetary gear set (RS4) is linked to the ring gear (33) of the third planetary gear set (RS3) and can be fixed via a fourth shifting component (D); that the sun gear (41) of the fourth planetary gear set (RS4) can be fixed via a sixth shifting component (F); and that the ring gear (43) of the fourth planetary gear set (RS4) is linked to the spider (35) of the planetary gears (32) of the third planetary gear set (RS3) and to the output shaft (2) [Fig. 8A].

12. Multistage transmission according to claim 1, 2 or 3, **characterized in that** the drive shaft (1) is linked to the sun gear (21) of the second planetary gear set (RS2); that the outer planetary gears (22") of the second planetary gear set (RS2) are linked to the planetary gears (12) of the first planetary gear set (RS1); that the sun gear (11) of the first planetary gear set (RS1) is fixed; that the drive shaft (1) can be linked to the sun gear (41) of the fourth planetary gear set (RS4) via a second shifting component (B) and to the spider (45) of the planetary gears (42) of the fourth planetary gear set (RS4), which is linked to the ring gear (33) of the third planetary gear set (RS3), via a fifth shifting component (E); that the spider (15) common to the outer planetary gears (22') of the second planetary gear set (RS2) and the planetary gears (12) of the first planetary gear set (RS1) is linked to the spider (25') of the inner planetary gears (22') of the second planetary gear set (RS2) and can be linked to the sun gear (41) of the fourth planetary gear set (RS4) via a sixth shifting component (F); that the ring gear (13) of the first planetary gear set (RS1) is linked to the ring gear (23) of the second planetary gear set (RS2) and can be linked to the spider (45) of the fourth planetary gear set (RS4) via a fourth shifting component (D) and can be linked to the sun gear (41) of the fourth planetary gear set (RS4) via a third shifting component (C); that the spider (15) common to the outer planetary gears (22') of the second planetary gear set (RS2) and the planetary gear sets (12) of the first planetary gear set (RS 1) can be linked to the sun gear (31) of the third planetary gear set (RS3) via a first shifting component (A); and that the ring gear (43) of the fourth planetary gear set (RS4) is linked to the spider (35) of the sun gears (32) of the third planetary gear set (RS3) and to the output shaft (2) [Fig. 15A].

13. Multistage transmission according to the generic term of claim 1, **characterized in that** the front-mounted planetary gear set (VS) is composed of three non-controllable, linked planetary gear sets (RS1, RS2a, RS2b), whereby the three planetary gear sets (RS1, RS2a, RS2b) produce three speeds (n1, n2a, n2b) on the on the output side which, in addition to the input speed (n) of the drive shaft (1), can be transmitted to at least one of the two controllable planetary gear sets (RS3, RS4), which act on the output shaft (2), of the rear-mounted planetary gear set (NS), namely through selective closing of the shifting components (A through G) in such a manner that during changing up or down one gear only one of the two active shifting components is deactivated and another shifting component is activated and that at least seven forward speeds are created.

14. Multistage transmission according to claim 13, **characterized in that** the number of forward speeds exceeds that of the shifting components (A through G) by at least two.

15. Multistage transmission according to claim 13 or 14, **characterized in that** a first front-mounted planetary gear set (RS1), a second front-mounted planetary gear set (RS2a) and a third front-mounted planetary gear set (RS2b) are provided as a front-mounted gear set (VS) and constitute a non-controllable triple-spider five-shaft transmission, whereby at least one shaft operates at the input speed (n) of the drive shaft (1) and at least one more shaft is fixed; and that the controllable rear-mounted transmission (NS) is a controllable dual-spider four-shaft transmission comprising a first rear-mounted planetary gear set (RS3) and a second rear-mounted planetary gear set (RS4).

16. Multistage transmission according to claim 13, 14 or 15, **characterized in that** the first front-mounted planetary gear set (RS 1) is linked to the drive shaft (11); that the outer planetary gears (22b") of the third front-mounted planetary gear set (RS2b) and the planetary gears (22a) of the second front-mounted planetary gear set (RS2a) are linked to each other; that the spider (25b") common to the planetary gears (22a) of the second front-mounted planetary gear set (RS2a) and the outer planetary gears (22b") of the third front-mounted planetary gear set (RS2b) is linked to the spider (25b') of the inner planetary gears (22b') of the third front-mounted planetary gear set (RS2b) and to the spider (15) of the planetary gears (12) of the first front-mounted planetary gear set (RS1); that the ring gear (13) of the first front-mounted planetary gear set (RS1) and the sun gear (21b) of the third front-mounted planetary gear set (RS2b) are fixed; that the ring gear (23a) of the second front-mounted planetary gear set (RS2a) and the ring gear (23b) of the third front-mounted planetary gear set (RS2b) can be linked to the spider (45) of the planetary gears (42) of the second rear-mounted planetary gear set (RS4) via a fourth shifting component (D); that the spider (45) of the second rear-mounted planetary gear set (RS4) is linked to the ring gear (33) of the first rear-mounted planetary gear set (RS3); that the ring gear (23a) of the second front-mounted planetary gear set (RS2a) and the ring gear (23b) of the third front-mounted planetary gear set (RS2b) can be linked to the ring gear (43) of the second rear-mounted planetary gear set (RS4) via a sixth shifting component (F); that the drive shaft (1) can be linked to the sun gear (41) of the second rear-mounted planetary gear set (RS4) and to the sun gear (31), which is linked to it, of the first rear-mounted planetary gear set (RS3) via a first shifting component (A) and to the spider (45) of the second rear-mounted planetary gear set (RS4) via a fifth shifting component (E); that the ring gear (43) of the second rear-mounted planetary gear set (RS4) can be fixed via a third shifting component (C); that the sun gear (2 1 a) of the second front-mounted planetary gear set (RS2a) can be linked to the ring gear (43) of the second rear-mounted planetary gear set (RS4) via a second shifting component (B); that the spider (25b") common to the planetary gears (22a) of the second front-mounted planetary gear set (RS2a) and to the outer planetary gears (22b") of the third front-mounted planetary gear set (RS2b) can be linked to the ring gear (43) of the second rear-mounted planetary gear set (RS4) via a seventh shifting component (G); and that the spider (35) of the planetary gears (32) of the first rear-mounted planetary gear set (RS3) is linked to the output shaft (2) [Fig. 10A].

17. Multistage transmission according to the generic term of claim 1, **characterized in that** the front-mounted gear set (VS) is composed of at least four non-controllable, linked planetary gear sets (RS1a, RS1b, RS2a, RS2b) producing four speeds (n1a, n1b, n2a, n2b) on the output side which, in addition to the input speed (n) of the drive shaft (1), can be transmitted to at least one of the controllable planetary gear sets (RS3, RS4), which act on the output shaft (2), of the rear-mounted planetary gear set (NS), namely through selective closing of the shifting components (A through H) in such a manner that during changing up or down one gear only one of the two active shifting components is deactivated and another shifting component is activated; and that at least seven forward speeds are created.

18. Multistage transmission according to claim 17, **characterized in that** the number of forward speeds exceeds that of the shifting components (A through H) by at least two.

19. Multistage transmission according to claim 17 or 18, **characterized in that** a first front-mounted planetary gear set (RS1a), a second front-mounted planetary gear set (RS1b), a third front-mounted planetary gear set (RS2a) and a fourth front-mounted planetary gear set (RS2b) are provided as a front-mounted gear set (VS) and constitute a non-controllable four-spider six-shaft transmission, whereby at least one shaft operates at the input speed (n) of the drive shaft (1) and at least one further shaft is fixed; and that the controllable rear-mounted transmission (NS) is a controllable dual-spider four-shaft transmission comprising a first rear-mounted planetary gear set (RS3) and a second rear-mounted planetary gear set (RS4).

20. Multistage transmission according to claim 17, 18, or 19, **characterized in that** the planetary gears (12a) of the first front-mounted planetary gear set (RS1a) are linked to the outer planetary gears (12b") of the second front-mounted planetary gear set (RS1b), whereby the spider (15b") common to the planetary gears (12a) of the first front-mounted planetary gear set (RS1a) and to the outer planetary gears (12b") of the second front-mounted planetary gear set (RS1b) is linked to the spider (15b') of the inner planetary gears (12b') of the second front-mounted planetary gear set (RS1b); that the planetary gears (22a) of the third front-mounted planetary gear set (RS2a) are linked to the outer planetary gears (22b") of the fourth front-mounted planetary gear set (RS2b), whereby the spider (25b") common to the planetary gears (22a) of the third front-mounted planetary gear set (RS2a) and to the outer planetary gears (22b") of the fourth front-mounted planetary gear set (RS2b) is linked to the spider (25b') of the inner planetary gears (22b') of the fourth front-mounted planetary gear set (RS2b) and to the spider (15b") common to the planetary gears (12a) of the first front-mounted planetary gear set (RS1a) and to the outer planetary gears (12b") of the second front-mounted planetary gear set (RS1b); that the drive shaft (1) is linked to the sun gear (11b) of the second front-mounted planetary gear set (RS1b) and to the sun gear (21a) of the third front-mounted planetary gear set (RS2a); that the sun gear (11a) of the first front-mounted planetary gear set (RS1a) is fixed; that the ring gear (13a) of the first front-mounted planetary gear set (RS1a) is linked to the ring gear (13b) of the second front-mounted planetary gear set (RS1b) and can be linked to the sun gear (41) of the second rear-mounted planetary gear set (RS4) via a second shifting component (B); that the drive shaft (1) can be linked to the sun gear (31) of the first rear-mounted planetary gear set (RS3) via a first shifting component (A) and via a fifth shifting component (E) to the ring gear (33) of the first rear-mounted planetary gear set (RS3), which is linked to the spider (45) of the planetary gears (42) of the second rear-mounted planetary gear set (RS4); that the sun gear (21b) of the fourth front-mounted planetary gear set (RS2b) can be linked to the ring gear (33) of the first rear-mounted planetary gear set (RS3) and to the spider (45) of the second rear-mounted planetary gear set (RS4) via a first shifting component (D) and can be linked to the sun gear (41) of the second rear-mounted planetary gear set (RS4) via a sixth shifting component (F); that the spider (25b") of the outer planetary gears (22b") of the fourth front-mounted planetary gear set (RS2b) can be linked to the sun gear (41) of the second rear-mounted planetary gear set (RS4) via an eighth shifting component (H); that the ring gear (23a) of the third front-mounted planetary gear set (RS2a) is linked to the ring gear (23b) of the fourth front-mounted planetary gear set (RS2b) and can be linked to the sun gear (41) of the second rear-mounted planetary gear set (RS4) via a seventh shifting component (G); that the sun gear (41) of the second rear-mounted planetary gear set (RS4) can be fixed via a third shifting component (C); and that the spider (35) of the planetary gears (32) of the first rear-mounted planetary gear set (RS3) is linked to the ring gear (43) of the second rear-mounted planetary gear set (RS4) and to the output shaft (2) [Fig. 11A].

21. Multistage transmission according to claim 17, 18 or 19, **characterized in that** the drive shaft (1) is linked to the sun gear (11a) of the first front-mounted planetary gear set (RS1a); that the outer planetary gears (12a") of the fist front-mounted planetary gear set (RS1a), the planetary gears (12b) of the second front-mounted planetary gear set (RS1b), the planetary gears (22a) of the third front-mounted planetary gear set (RS2a) and the planetary gears (22b) of the fourth front-mounted planetary gear set (RS2a) constitute a stepped planet gear; that the spider (15a') of the inner planetary gears (12a') of the first front-mounted planetary gear set (RS1a) is linked to the spider (15a") of the outer planetary gears (12a") of the first front-mounted planetary gear set (RS1a), the spider (15b) of the planetary gears (12b) of the second front-mounted planetary gear set (RS1b), the spider (25a) of the planetary gears (22a) of the third front-mounted planetary gear set (RS2a) and the spider (25b) of the planetary gears (22b) of the fourth front-mounted planetary gear set (RS2b), and via a seventh shifting component (G) can be linked to the sun gear (41) of the second rear-mounted planetary gear set (RS4); that the sun gear (11b) of the second front-mounted planetary gear set (RS1b) is fixed; that the sun gear (41) of the second rear-mounted planetary gear set (RS4) can be fixed via a third shifting component (C); that the ring gear (23a) of the third front-mounted planetary gear set (RS2a) can be linked to the sun gear (41) of the second rear-mounted planetary gear set (RS4) via an eighth shifting component (H); that the drive shaft (1) can be linked to the sun gear (31) of the first rear-mounted planetary gear set (RS3) via a first shifting component (A); that the ring gear (13a) of the first front-mounted planetary gears set (RS1a) and the ring gear (13b) of the second front-mounted planetary gear set (RS1b) are linked to each other and can be linked to the sun gear (41) of the second rear-mounted planetary gear set (RS4) via a second shifting component (B); that the linked spiders (15a", 15a') of the outer and inner planetary gears (12a", 12a') of the first front-mounted planetary gear set can be linked to the spider (35') of the inner planetary gears (32') of the first rear-mounted planetary gear set (RS3) via a forth shifting component (D); that the outer planetary gears (32") of the first rear-mounted planetary gear set (RS3) and the planetary gears (42) of the second rear-mounted planetary gear set (RS4) are linked to each other; that the spider (35") of the outer planetary gears (32") of the first rear-mounted planetary gear set (RS3) is linked to the spider (35') of the inner planetary gears (32') of the first rear-mounted planetary gear set (RS3) and to the spider (45) of the planetary gears (42) of the second rear-mounted planetary gear set (RS4) and can be linked to the drive shaft (1) via a fifth shifting component (E); that the sun gear (21b) of the fourth front-mounted planetary gear set (RS2b) can be linked to the sun gear (41) of the second rear-mounted planetary gear set (RS4) via a sixth shifting component (F); and that the ring gear (33) of the first rear-mounted planetary gear set (RS3) and the ring gear (43) of the second rear-mounted planetary gear set (RS4) are jointly linked to the output shaft (2) [Fig. 16A].

## Revendications

1. Transmission à rapports étagés, comprenant un arbre d'entrée (1) qui est relié à un train de roues amont (VS), un arbre de sortie (2) qui est relié à un train aval (NS), composé de deux trains épicycloïdaux commutables accouplés (RS3, RS4), et des éléments de commutation (A à H), dans lequel, par commande sélective des éléments de commutation (A à H), la vitesse de rotation de l'arbre d'entrée (1) et la vitesse de rotation du train de roues amont (VS) peuvent être transmises sélectivement au train de roues aval (NS) pour la commutation de vitesses, **caractérisée en ce que** le train de roues amont (VS) est formé de deux trains épicycloïdaux (RS1, RS2) non commutables, accouplés, les deux trains épicycloïdaux (RS1, RS2) produisant, côté sortie, deux vitesses de rotation (n1, n2) qui, en dehors de la vitesse de rotation d'entrée (n) de l'arbre d'entrée (1), peuvent être commutés au choix sur au moins un des deux trains épicycloïdaux (RS3, RS4) du train de roues aval (NS) par fermeture sélective des éléments de commutation (A à F) de telle manière que, pour passer d'une vitesse à la vitesse immédiatement supérieure ou inférieure, parmi les deux éléments de commutation qui sont actionnés à ce moment, seul un élément de commutation est ouvert et un autre élément de commutation est fermé, et **en ce qu'**au moins sept vitesses de marche avant sont formées.

2. Transmission à rapports étagés selon la revendication 1, **caractérisée en ce que** le nombre des vitesses de marche avant est supérieur d'au moins deux au nombre des éléments de commutation (A à F).

3. Transmission à rapports étagés selon la revendication 1 ou 2, **caractérisée en ce qu'**il est prévu, comme train de roues amont (VS) un premier train épicycloïdal (RS1) et un deuxième train épicycloïdal (RS2) qui forment un mécanisme non commutable à deux porte-satellites, quatre arbres, au moins un arbre tournant à la vitesse de rotation d'entrée (n) de l'arbre d'entrée (1), un autre arbre étant immobilisé, et **en ce que** le train de roues aval commutable (NS) est un mécanisme commutable à deux porte-satellites, quatre arbres qui comprend un troisième train épicycloïdal (RS3) et un quatrième train épicycloïdal (RS4).

4. Transmission à rapports étagés selon la revendication 1, 2 ou 3, **caractérisée en ce que** la roue planétaire (11) du premier train épicycloïdal (RS1) et la roue planétaire (21) du deuxième train épicycloïdal (RS2) sont disposées sur l'arbre d'entrée (1), **en ce que** la couronne à denture intérieure (13) du premier train épicycloïdal (RS1) est immobilisée, et **en ce que** le porte-satellites (15) des pignons satellites (12) du premier train épicycloïdal (RS1) est relié au porte-satellites (25) des pignons satellites (22) du deuxième train épicycloïdal (RS2), **en ce que** la couronne à denture intérieure (23) du deuxième train épicycloïdal (RS2) peut être reliée par l'intermédiaire d'un quatrième élément de commutation (D) à la couronne à denture intérieure (33) du troisième train épicycloïdal (RS3), **en ce que** la couronne à denture intérieure (33) du troisième train épicycloïdal (RS3) est reliée au porte-satellites (45) des pignons satellites (42) du quatrième train épicycloïdal (RS4), **en ce que** le porte-satellites (15) du premier train épicycloïdal (RS1) est relié par l'intermédiaire d'un premier élément de commutation (A) à la roue planétaire (31) du troisième train épicycloïdal (RS3), **en ce que** le porte-satellites (25) du deuxième train épicycloïdal (RS2) peut être relié par l'intermédiaire d'un troisième élément de commutation (C) à la roue planétaire (41) du quatrième train épicycloïdal (RS4), **en ce que** le porte-satellites (35) des pignons satellites (32) du troisième train épicycloïdal (RS3) est relié à la couronne à denture intérieure (43) du quatrième train épicycloïdal (RS4) et à l'arbre de sortie (2), **en ce que** l'arbre d'entrée (1) peut être relié par l'intermédiaire d'un deuxième élément de commutation (B) à la roue planétaire (41) du quatrième train épicycloïdal (RS4) et au porte-satellites (45) du deuxième train épicycloïdal (RS4) et, par l'intermédiaire d'un cinquième élément de commutation (E), au porte-satellites (45) du quatrième train épicycloïdal (RS4) (Figure 1A).

5. Transmission à rapports étagés selon la revendication 1, 2 ou 3, **caractérisée en ce que** l'arbre d'entrée (1) est relié à la roue planétaire (11) du premier train épicycloïdal (RS1) et à la couronne à denture intérieure (21) du deuxième train épicycloïdal (RS2), **en ce que** le porte-satellites (25) des pignons satellites (22) du deuxième train épicycloïdal (RS2) est immobilisé et est relié à la couronne à denture intérieure (13) du premier train épicycloïdal (RS1), **en ce que** l'arbre d'entrée (1) peut être relié, par l'intermédiaire d'un premier élément de commutation (A), à la roue planétaire (31) du troisième train épicycloïdal (RS3) et, par l'intermédiaire d'un cinquième élément de commutation (E), au porte-satellites (45) des pignons satellites (42) du quatrième train épicycloïdal (RS4), **en ce que** le porte-satellites (45) du quatrième train épicycloïdal (RS4) est relié à la couronne à denture intérieure (33) du troisième train épicycloïdal (RS3), **en ce que** le porte-satellites (45) du quatrième train épicycloïdal (RS4) et la couronne à denture intérieure (33), qui y est reliée, du troisième train épicycloïdal (RS3) peuvent être immobilisés par un quatrième élément de commutation (D), **en ce que** la couronne à denture intérieure (23) du deuxième train épicycloïdal (RS2) peut être reliée par un troisième élément de commutation (C) à la roue planétaire (41) du quatrième train épicycloïdal (RS4), **en ce que** le porte-satellites (15) des pignons satellites (12) du premier train épicycloïdal (RS1) peut être relié, par un deuxième élément de commutation (B), à la roue planétaire (41) du quatrième train épicycloïdal (RS4) et **en ce que** la couronne à denture intérieure (42) du quatrième train épicycloïdal (RS4) est reliée au porte-satellites (35) des pignons satellites (32) du troisième train épicycloïdal (RS3) et à l'arbre de sortie (2) (Fig. 2A).

6. Transmission à rapports étagés selon la revendication 1, 2 ou 3, **caractérisée en ce que** l'arbre d'entrée (1) est relié à la roue planétaire (11) du premier train épicycloïdal (RS1), **en ce que** le porte-satellites (15) des pignons satellites (12) du premier train épicycloïdal (RS1) est relié au porte-satellites (25") des pignons satellites extérieurs (22") et au porte-satellites (25') des pignons satellites intérieurs (22') du deuxième train épicycloïdal (RS2), **en ce que** les pignons satellites (12) du premier train épicycloïdal (RS1) sont accouplés aux pignons satellites extérieurs (22') du deuxième train épicycloïdal (RS2), **en ce que** la couronne à denture intérieure (13) du premier train épicycloïdal (RS1) est reliée à la couronne à denture intérieure (23) du deuxième train épicycloïdal (RS2), **en ce que** la couronne à denture intérieure (13) du premier train épicycloïdal (RS1) est immobilisée, **en ce que** le porte-satellites (35") des pignons satellites extérieurs (32") du troisième train épicycloïdal (RS3) est relié au porte-satellites (35') des pignons satellites intérieurs (32') du troisième train épicycloïdal (RS3) et au porte-satellites (45) des pignons satellites (42) du quatrième train épicycloïdal (RS4), **en ce que** les deux porte-satellites (35', 35") du troisième train épicycloïdal (RS3) et le porte-satellites (45), qui y est relié, du quatrième train épicycloïdal (RS4) peuvent être immobilisés par un quatrième élément de commutation (0), **en ce que** l'arbre d'entrée (1) peut être relié, par un premier élément de commutation (A), à la roue planétaire (31) du troisième train épicycloïdal (RS3), **en ce que** l'arbre d'entrée (1) peut être relié par un cinquième élément de commutation (E) aux porte-satellites (35', 35") du troisième train épicycloïdal (RS3) et au porte-satellites (45), qui y est relié, du quatrième train épicycloïdal (RS4), **en ce que** les pignons satellites (42) du quatrième train épicycloïdal (RS4) sont accouplés aux pignons satellites extérieurs (32") du troisième train épicycloïdal (RS3), **en ce que** la roue planétaire (21) du deuxième train épicycloïdal (RS2) peut être reliée, par un troisième élément de commutation (C), à la roue planétaire (41) du quatrième train épicycloïdal (RS4), **en ce que** le porte-satellites (15) du premier train épicycloïdal (RS1) et les deux porte-satellites (25', 25"), qui y sont reliés, du deuxième train épicycloïdal (RS2) peuvent être reliés, par l'intermédiaire d'un deuxième élément de commutation (B), à la roue planétaire (41) du quatrième train épicycloïdal (RS4),et **en ce que** la couronne à denture intérieure (33) du troisième train épicycloïdal (RS3) et de la couronne à denture intérieure (43), qui y est accouplée, du quatrième train épicycloïdal (RS4), est reliée à l'arbre de sortie (1) (Fig. 3A).

7. Transmission à rapports étagés selon la revendication 1, 2 ou 3, **caractérisée en ce que** les pignons satellites (12) du premier train épicycloïdal (RS1) sont accouplés aux pignons satellites (22) du deuxième train épicycloïdal (RS2), **en ce que** la roue planétaire (11) du premier train épicycloïdal (RS1) est immobilisée, **en ce que** le porte-satellites (15) des pignons satellites (12) du premier train épicycloïdal (RS1) et le porte-satellites (25) des pignons satellites (22) du deuxième train épicycloïdal (RS2) sont reliés entre eux, **en ce que** l'arbre d'entrée (1) est relié à la couronne à denture intérieure (13) du premier train épicycloïdal (RS1) et à la couronne à denture intérieure (23) du deuxième train épicycloïdal, **en ce que** la roue planétaire (21) du deuxième train épicycloïdal (RS2) peut être reliée, par l'intermédiaire d'un quatrième élément de commutation (D), au porte-satellites (45) des roues planétaires (42) du quatrième train épicycloïdal (RS4), **en ce que** le porte-satellites (15) du premier train épicycloïdal (RS1) et le porte-satellites (25), qui y est relié, du deuxième train épicycloïdal (RS2) peut être relié, par l'intermédiaire d'un troisième élément de commutation (C), à la couronne à denture intérieure (43) du quatrième train épicycloïdal (RS4), **en ce que** l'arbre d'entrée (1) peut être relié, par l'intermédiaire d'un deuxième élément de commutation (B), à la couronne à denture intérieure (43) du quatrième train épicycloïdal (RS4), **en ce que** l'arbre d'entrée (1) peut être relié, par l'intermédiaire d'un cinquième élément de commutation (E), à la couronne à denture intérieure (33) du troisième train épicycloïdal (RS3), **en ce que** la couronne à denture intérieure (33) du troisième train épicycloïdal (RS3) est reliée au porte-satellites (45) du quatrième train épicycloïdal (RS4), **en ce que** le porte-satellites (35) des pignons satellites (32) du troisième train épicycloïdal (RS3) est relié à l'arbre de sortie (2) et **en ce que** la roue planétaire (31) du troisième train épicycloïdal (RS3) et celle (41) du quatrième train épicycloïdal (RS4) sont reliées entre elles et peuvent être immobilisées par l'intermédiaire d'un premier élément de commutation (A) (Figure 4A).

8. Transmission à rapports étagés selon la revendication 1, 2 ou 3, **caractérisée en ce que** l'arbre d'entrée (1) est relié à la roue planétaire (11) du premier train épicycloïdal (RS1), **en ce que** la roue planétaire (11) du premier train épicycloïdal (RS1) est reliée à la roue planétaire (21) du deuxième train épicycloïdal (RS2), **en ce que** la couronne à denture intérieure (11) du premier train épicycloïdal (RS1) est immobilisée, **en ce que** le porte-satellites (15) des pignons satellites (12) du premier train épicycloïdal (RS1) est relié au porte-satellites (25) des pignons satellites (22) du deuxième train épicycloïdal (RS2), **en ce que** la couronne à denture intérieure (23) du deuxième train épicycloïdal (RS2) peut être reliée, par l'intermédiaire d'un quatrième élément de commutation (D), au porte-satellites (45) du quatrième train épicycloïdal (RS4), **en ce que** le porte-satellites (45) du quatrième train épicycloïdal (RS4) est relié à la couronne à denture intérieure (33) du troisième train épicycloïdal (RS3), **en ce que** l'arbre d'entrée (1) est relié, par l'intermédiaire d'un premier élément de commutation (A), à la roue planétaire (31) du troisième train épicycloïdal (RS3) et à la roue planétaire (41) du quatrième train épicycloïdal (RS4) qui y est reliée, **en ce que** l'arbre d'entrée (1) peut être relié, par l'intermédiaire d'un cinquième élément de commutation (E), au porte-satellites (45) du quatrième train épicycloïdal (RS4), et à la couronne à denture intérieure (33), qui y est reliée, du troisième train épicycloïdal (RS3), **en ce que** le porte-satellites (15) du premier train épicycloïdal (RS1) et du porte-satellites (25), qui y est relié, du deuxième train épicycloïdal (RS2) peuvent être reliés, par l'intermédiaire d'un deuxième élément de commutation (B), à la couronne à denture intérieure (43) du quatrième train épicycloïdal (RS4), **en ce que** la couronne à denture intérieure (43) du quatrième train épicycloïdal (RS4) peut être immobilisée par un troisième élément de commutation (C), et **en ce que** le porte-satellites (35) des pignons satellites (32) du troisième train épicycloïdal (RS3) est relié à l'arbre de sortie (2) (Figure 5A).

9. Transmission à rapports étagés selon la revendication 1, 2 ou 3, **caractérisée en ce que** l'arbre d'entrée (1) est relié à la couronne à denture intérieure (13) du premier train épicycloïdal (RS1), **en ce que** la couronne à denture intérieure (13) du premier train épicycloïdal (RS1) est reliée à la couronne à denture intérieure (23) du deuxième train épicycloïdal (RS2), **en ce que** la roue planétaire (11) du premier train épicycloïdal (RS1) est immobilisée, **en ce que** le porte-satellites (15) des pignons satellites (12) du premier train épicycloïdal (RS1) est relié au porte-satellites (25) des pignons satellites (22) du deuxième train épicycloïdal (RS2), **en ce que** la roue planétaire (21) du deuxième train épicycloïdal (RS2) peut être reliée, par l'intermédiaire d'un quatrième élément de commutation (D), au porte-satellites (35') des pignons satellites intérieurs (32') du troisième train épicycloïdal (RS3), **en ce que** le porte-satellites (35') des pignons satellites intérieurs (32') du troisième train épicycloïdal (RS3) est relié au porte-satellites (35") des pignons satellites extérieurs (32") du troisième train épicycloïdal (RS3), **en ce que** les pignons satellites extérieurs (32") du troisième train épicycloïdal (RS3) sont accouplés aux pignons satellites (42) du quatrième train épicycloïdal (RS4), **en ce que** le porte-satellites (25') du deuxième train épicycloïdal (RS2) peut être relié, par l'intermédiaire d'un premier élément de commutation (A), à la roue planétaire (31) du troisième train épicycloïdal (RS3) **en ce que** l'arbre d'entrée (1) peut être relié, par l'intermédiaire d'un cinquième élément de commutation (E), au porte-satellites (35') et au porte-satellites (35") du troisième train épicycloïdal (RS3), **en ce que** la roue planétaire (21) du deuxième train épicycloïdal (RS2) peut être reliée, par l'intermédiaire d'un sixième élément de commutation (F), à la roue planétaire (41) du quatrième train épicycloïdal (RS4), **en ce que** le porte-satellites (15) du premier train épicycloïdal (RS1) et le porte-satellites (25) du deuxième train épicycloïdal (RS2) peuvent être reliés, par l'intermédiaire d'un deuxième élément de commutation (B), à la roue planétaire (41) du quatrième train épicycloïdal (RS4), **en ce que** la roue planétaire (41) du quatrième train épicycloïdal (RS4) peut être immobilisée par l'intermédiaire d'un troisième élément de commutation (C), **en ce que** la roue planétaire (33) du troisième train épicycloïdal (RS3) est reliée à la couronne à denture intérieure (43) du quatrième train épicycloïdal (RS4) et à l'arbre de sortie (2) (Figure 6A).

10. Transmission à rapports étagés selon la revendication 1, 2 ou 3, **caractérisée en ce que** l'arbre d'entrée (1) est relié à la couronne à denture intérieure (13) du premier train épicycloïdal (RS1), **en ce que** le porte-satellites (15) des pignons satellites (12) du premier train épicycloïdal (RS1) est relié au porte-satellites (25) des pignons satellites (22) du deuxième train épicycloïdal (RS2), **en ce que** la couronne à denture intérieure (13) est reliée à la couronne à denture intérieure (23) du deuxième train épicycloïdal (RS2), **en ce que** la roue planétaire (11) du premier train épicycloïdal (RS1) est immobilisée, **en ce que** l'arbre d'entrée (1) peut être relié, par l'intermédiaire d'un cinquième élément de commutation (E), au porte-satellites (45) des pignons satellites (42) du quatrième train épicycloïdal (RS4), qui est relié à la couronne à denture intérieure (33) du troisième train épicycloïdal (RS3), **en ce que** l'arbre d'entrée (1) peut être relié, par l'intermédiaire d'un deuxième élément de commutation (B), à la roue planétaire (41) du quatrième train épicycloïdal (RS4), **en ce que** le porte-satellites (15) du premier train épicycloïdal (RS1) et le porte-satellites (25) du deuxième train épicycloïdal (RS2) peuvent être reliés, par l'intermédiaire d'un premier élément de commutation (A), à la roue planétaire (31) du troisième train épicycloïdal (RS3) et peuvent être reliés, par l'intermédiaire d'un sixième élément de commutation (F), à la roue planétaire (41) du quatrième train épicycloïdal (RS4), **en ce que** la roue planétaire (21) du deuxième train épicycloïdal (RS2) peut être reliée, par l'intermédiaire d'un troisième élément de commutation (C), à la roue planétaire (41) du quatrième train épicycloïdal (RS4) et peut être reliée, par l'intermédiaire d'un quatrième élément de commutation (D), au porte-satellites (45) du quatrième train épicycloïdal (RS4) et à la couronne à denture intérieure (33) du troisième train épicycloïdal (RS3), et **en ce que** la couronne à denture intérieure (43) du quatrième train épicycloïdal (RS4) est reliée au porte-satellites (35) des pignons satellites (32) du troisième train épicycloïdal (RS3) et à l'arbre de sortie (2) (Fig. 7A).

11. Transmission à rapports étagés selon la revendication 1, 2 ou 3, **caractérisée en ce que** l'arbre d'entrée (1) est relié à la roue planétaire (21) du deuxième train épicycloïdal (RS2) et au porte-satellites (15') des pignons satellites intérieurs (12') du premier train épicycloïdal (RS1), **en ce que** le porte-satellites (15') des pignons satellites intérieurs (12') du premier train épicycloïdal (RS1) est relié au porte-satellites (15") des pignons satellites extérieurs (12") du premier train épicycloïdal (RS1), **en ce que** le porte-satellites (25) des pignons satellites (22) du deuxième train épicycloïdal (RS2) est immobilisé et est relié à la roue planétaire (11) du premier train épicycloïdal (RS1), **en ce que** l'arbre d'entrée (1) peut être relié, par l'intermédiaire d'un premier élément de commutation (A), à la roue planétaire (31) du troisième train épicycloïdal (RS3), **en ce que** la couronne à denture intérieure (23) du deuxième train épicycloïdal (RS2) peut être reliée, par l'intermédiaire d'un troisième élément de commutation (C), à la roue planétaire (41) du quatrième train épicycloïdal (RS4), **en ce que** la couronne à denture intérieure (13) du premier train épicycloïdal (RS1) peut être reliée par l'intermédiaire d'un deuxième élément de commutation (B), à la roue planétaire (41) du quatrième train épicycloïdal (RS4), **en ce que** l'arbre d'entrée (1) peut être relié, par l'intermédiaire d'un cinquième élément de commutation (E), au porte-satellites (45) des pignons satellites (42) du quatrième train épicycloïdal (RS4), **en ce que** le porte-satellites (45) du quatrième train épicycloïdal (RS4) est relié à la couronne à denture intérieure (33) du troisième train épicycloïdal (RS3) et peut être immobilisé par l'intermédiaire d'un quatrième élément de commutation (D), **en ce que** la roue planétaire (41) du quatrième train épicycloïdal (RS4) peut être immobilisée par l'intermédiaire d'un sixième élément de commutation (F), et **en ce que** la couronne à denture intérieure (43) du quatrième train épicycloïdal (RS4) est reliée au porte-satellites (35) des pignons satellites (32) du troisième train épicycloïdal (RS3) et à l'arbre d'entrée (2) (Figure 8A).

12. Transmission à rapports étagés selon la revendication 1, 2 ou 3, **caractérisée en ce que** l'arbre d'entrée (1) est relié à la roue planétaire (21) du deuxième train épicycloïdal (RS2), **en ce que** les pignons satellites extérieurs (22") du deuxième train épicycloïdal (RS2) sont accouplés aux pignons satellites (12) du premier train épicycloïdal (RS1), **en ce que** la roue planétaire (11) du premier train épicycloïdal (RS1) est immobilisée, **en ce que** l'arbre d'entrée (1) peut être relié, par l'intermédiaire d'un deuxième élément de commutation (B), à la roue planétaire (11) du premier train épicycloïdal (RS1), et peut être relié, par l'intermédiaire d'un cinquième élément de commutation (E), au porte-satellites (45) des pignons satellites (42) du quatrième train épicycloïdal (RS4) qui est relié à la couronne à denture intérieure (33) du troisième train épicycloïdal (RS3), **en ce que** le porte-satellites (15) commun aux pignons satellites extérieurs (22') du deuxième train épicycloïdal (RS2) et aux pignons satellites (12) du premier train épicycloïdal (RS1) est relié au porte-satellites (25') des pignons satellites intérieurs (22') du deuxième train épicycloïdal (RS2) et peut être relié, par l'intermédiaire d'un sixième élément de commutation (F), à la roue planétaire (41) du quatrième train épicycloïdal (RS4), **en ce que** la couronne à denture intérieure (13) du premier train épicycloïdal (RS1) est reliée à la couronne à denture intérieure (23) du deuxième train épicycloïdal (RS2) et peut être reliée, par l'intermédiaire d'un quatrième élément de commutation (D), au porte-satellites (45) du quatrième train épicycloïdal (RS4) et, peut être relié, par l'intermédiaire d'un troisième élément de commutation (C), à la roue planétaire (41) du quatrième train épicycloïdal (RS4), **en ce que** le porte-satellites (15) commun aux pignons satellites extérieurs (22') du deuxième train épicycloïdal (RS2) et aux pignons satellites (12) du premier train épicycloïdal (RS1) peut être relié, par l'intermédiaire d'un premier élément de commutation (A), à la roue planétaire (31) du troisième train épicycloïdal (RS3), et **en ce que** la couronne à denture intérieure (43) du quatrième train épicycloïdal (RS4) est reliée au porte-satellites (35) des roues planétaires (32) du troisième train épicycloïdal (RS3) et à l'arbre de sortie (2) (Figure 15A).

13. Transmission à rapports étagés selon le préambule de la revendication 1, **caractérisée en ce que** le train de roues amont (VS) est formé de trois trains épicycloïdaux non commutables accouplés (RS1, RS2a, RS2b), les trois trains épicycloïdaux (RS1, RS2a, RS2b) produisant, côté sortie, trois vitesses de rotation (n1, n2a, n2b) qui peuvent être commutées au choix, en supplément de la vitesse de rotation d'entrée (n) de l'arbre d'entrée (1), sur au moins un des deux trains épicycloïdaux commutables (RS3, RS4) du train de roues aval (NS) qui agissent sur l'arbre de sortie (2), par fermeture sélective des éléments de commutation (A à G) de telle manière que, pour passer d'une vitesse à une vitesse arrière ou inférieure immédiatement suivante, parmi les deux éléments de commutation qui sont actionnés à ce moment, à chaque fois seulement un élément de commutation est desserré et un autre élément de commutation est serré et **en ce qu'**au moins sept vitesses de marche avant sont formées.

14. Transmission à rapports étagés selon la revendication 13, **caractérisée en ce que** le nombre des vitesses de marche avant est supérieure d'au moins deux au nombre des éléments de commutation (A à G).

15. Transmission à rapports étagés selon la revendication 13 ou 14, **caractérisée en ce qu'**il est prévu comme train de roues amont (VS), un premier train épicycloïdal amont (RS1), un deuxième train épicycloïdal amont (RS2a) et un troisième train épicycloïdal amont (RS2b) qui forment une transmission non commutable à trois porte-satellites, cinq arbres, au moins un arbre tournant à la vitesse de rotation d'entrée (n) de l'a arbre d'entrée (1) et au moins un autre arbre étant immobilisé, et **en ce que** le mécanisme aval commutable (NS) est un mécanisme commutable à deux porte-satellites, quatre arbres qui comprend un premier train épicycloïdal aval (RS3) et un deuxième train épicycloïdal aval (RS4).

16. Transmission à rapports étagés selon la revendication 13, 14 ou 15 **caractérisée en ce que** le premier train épicycloïdal amont (RS1) est relié à l'arbre d'entrée (11), **en ce que** les pignons satellites extérieurs (22b") du troisième train épicycloïdal amont (RS2b) et les pignons satellites (22a) du deuxième train épicycloïdal amont (RS2a) sont accouplés entre eux, **en ce que** le porte-satellites (25b") commun aux pignons satellites (22a) du deuxième train épicycloïdal amont (RS2a) et aux pignons satellites extérieurs (22b") du troisième train épicycloïdal amont (RS2b) est relié au porte-satellites (25b') des pignons satellites intérieurs (22') du troisième train épicycloïdal amont (RS2b) et au porte-satellites (15) des pignons satellites (12) du premier train épicycloïdal amont (RS1), **en ce que** la couronne à denture intérieure (13) du premier train épicycloïdal amont (RS1) et la roue planétaire (21 b) du troisième train épicycloïdal amont (RS2b) sont immobilisées, **en ce que** la couronne à denture intérieure (23a) du deuxième train épicycloïdal amont (RS2a) et la couronne à denture intérieure (23b) du troisième train épicycloïdal amont (RS2b) peuvent être reliées, par l'intermédiaire d'un quatrième élément de commutation (D), au porte-satellites (45) des pignons satellites (42) du deuxième train épicycloïdal aval (RS4), **en ce que** le porte-satellites (45) du deuxième train épicycloïdal aval (RS4) est relié à la couronne à denture intérieure (33) du premier train épicycloïdal aval (RS3), **en ce que** la couronne à denture intérieure (23a) du deuxième train épicycloïdal amont (RS2a) et la couronne à denture intérieure (23b) du troisième train épicycloïdal amont (RS2b) peuvent être reliées, par l'intermédiaire d'un sixième élément de commutation (F), à la couronne à denture intérieure (43) du deuxième train épicycloïdal aval (RS4), **en ce que** l'arbre d'entrée (1) peut être relié, par l'intermédiaire d'un premier élément de commutation (A), à la roue planétaire (41) du deuxième train épicycloïdal aval (RS4) et à la roue planétaire (31), qui y est reliée, du premier train épicycloïdal aval (RS3) et peut être relié, par l'intermédiaire d'un cinquième élément de commutation (E) au porte-satellites (45) du deuxième train épicycloïdal aval (RS4), **en ce que** la couronne à denture intérieure (43) du deuxième train épicycloïdal aval (RS4) est immobilisé par l'intermédiaire d'un troisième élément de commutation (C), la roue planétaire (21a) du deuxième train épicycloïdal amont (RS2a) peut être reliée, par l'intermédiaire d'un deuxième élément de commutation (B), à la couronne à denture intérieure (43) du deuxième train épicycloïdal aval (RS4), le porte-satellites (25b") commun aux pignons satellites (22a) du deuxième train épicycloïdal amont (RS2a) et aux pignons satellites extérieurs (22b") du troisième train épicycloïdal amont (RS2b) peut être relié, par l'intermédiaire d'un septième élément de commutation (G), à la couronne à denture intérieure (43) du deuxième train épicycloïdal aval (RS4) et le porte-satellites (35) des pignons satellites (32) du premier train épicycloïdal aval (RS3) est relié à l'arbre de sortie (2) (Fig. 10A).

17. Transmission à rapports étagés selon le préambule de la revendication 1, **caractérisée en ce que** le train de roues amont (VS) est composé d'au moins quatre trains épicycloïdaux (RS1a, RS1b, RS2a, RS2b) non commutables, accouplés, qui produisent, côté sortie, quatre vitesses de rotation (n1a, n1b, n2a, n2b) qui, en dehors de la vitesse de rotation d'entrée (n) de l'arbre d'entrée (1), peuvent être commutés au choix sur au moins un des deux trains épicycloïdaux (RS3, RS4) du train de roues aval (NS), commutables, qui agissent sur l'arbre de sortie (2), par fermeture sélective des éléments de commutation (A à H) de telle manière que, pour passer d'une vitesse sur une vitesse supérieure ou inférieure immédiatement suivante, parmi les deux éléments de commutation qui sont actionnés à ce moment, à chaque fois seulement un élément de commutation est ouvert et un autre élément de commutation est fermé, et **en ce qu'**au moins sept vitesses de marche avant sont formées.

18. Transmission à rapports étagés selon la revendication 17, **caractérisée en ce que** le nombre des vitesses de marche avant est supérieur d'au moins deux au nombre des éléments de commutation (A à H).

19. Transmission à rapports étagés selon la revendication 17 ou 18, **caractérisée en ce que**, comme train de roues amont (VS), il est prévu un premier train épicycloïdal amont (RS1a), un deuxième train épicycloïdal amont (RS1b), un troisième train épicycloïdal amont (RS2a) et un quatrième train épicycloïdal amont (RS2b) qui forment un mécanisme non commutable à quatre porte-satellites, six arbres, au moins un arbre tournant à la vitesse de rotation d'entrée (n) de l'arbre d'entrée (1) et au moins un autre arbre étant immobilisé, et **en ce que** le mécanisme aval commutable (NS) est un mécanisme commutable à deux porte-satellites, quatre arbres, qui comprend un premier train épicycloïdal aval (RS3) et un deuxième train épicycloïdal aval (RS4).

20. Transmission à rapports étagés selon la revendication 17, 18 ou 19, **caractérisée en ce que** les pignons satellites (12a) du premier train épicycloïdal amont (RS1a) sont accouplés aux pignons satellites extérieurs (12b") du deuxième train épicycloïdal amont (RS1b), le porte-satellites (15b") commun aux pignons satellites (12a) du premier train épicycloïdal amont (RS1a) et aux pignons satellites extérieurs (12b") du deuxième train épicycloïdal amont (RS1b) étant relié au porte-satellites (15b') des pignons satellites intérieurs (12b') du deuxième train épicycloïdal amont (RS1b), **en ce que** les pignons satellites (22a) du troisième train épicycloïdal amont (RS2a) sont accouplés aux pignons satellites extérieurs (22b") du quatrième train épicycloïdal amont (RS2b), le porte-satellites (25b") commun aux pignons satellites (22a) du troisième train épicycloïdal amont (RS2a) et aux pignons satellites extérieurs (22b") du quatrième train épicycloïdal amont (RS2b) étant relié au porte-satellites (25b') des pignons satellites intérieurs (22b') du quatrième train épicycloïdal amont (RS2b) et au porte-satellites (15b") commun aux pignons satellites (12a) du premier train épicycloïdal amont (RS1a) et pignons satellites extérieurs (12b") du deuxième train épicycloïdal amont (RS1b), **en ce que** l'arbre d'entrée (1) est relié à la roue planétaire (11b) du deuxième train épicycloïdal amont (RS1b) et à la roue planétaire (21a) du troisième train épicycloïdal amont (RS2a), **en ce que** la roue planétaire (11a) du premier train épicycloïdal (RS1a) est immobilisé, **en ce que** la couronne à denture intérieure (13a) du premier train épicycloïdal amont (RS1a) est reliée à la couronne à denture intérieure (13b) du deuxième train épicycloïdal amont (RS1b) et peut être reliée, par l'intermédiaire d'un deuxième élément de commutation (B), à la roue planétaire (41) du deuxième train épicycloïdal aval (RS4), **en ce que** l'arbre d'entrée (1) peut être relié, par l'intermédiaire d'un premier élément de commutation (A), à la roue planétaire (31) du premier train épicycloïdal aval (RS3) et, par l'intermédiaire d'un cinquième élément de commutation (E), à la couronne à denture intérieure (33) du premier train épicycloïdal aval (RS3) qui est relié au porte-satellites (45) des pignons satellites (42) du deuxième train épicycloïdal aval (RS4), **en ce que** la roue planétaire (21 b) du quatrième train épicycloïdal amont (RS2b) peut être reliée, par l'intermédiaire d'un premier élément de commutation (D), à la couronne à denture intérieure (33) du premier train épicycloïdal aval (RS3) et au porte-satellites (45) du deuxième train épicycloïdal aval (RS4) et, par l'intermédiaire d'un sixième élément de commutation (F), à la roue planétaire (41) du deuxième train épicycloïdal aval (RS4), **en ce que** le porte-satellites (25b") des pignons satellites extérieurs (22b') du quatrième train épicycloïdal amont (RS2b) peut être relié, par l'intermédiaire d'un huitième élément de commutation (H), à la roue planétaire (41) du deuxième train épicycloïdal aval (RS4), **en ce que** la couronne à denture intérieure (23a) du troisième train épicycloïdal amont (RS2a) est reliée à la couronne à denture intérieure (23b) du quatrième train épicycloïdal amont (RS2b) et peut être reliée, par l'intermédiaire d'un septième élément de commutation (G), à la roue planétaire (41) du deuxième train épicycloïdal aval (RS4), **en ce que** la roue planétaire (41) du deuxième train épicycloïdal aval (RS4) peut être immobilisée par l'intermédiaire d'un troisième élément de commutation (C) et **en ce que** le porte-satellites (35) des pignons satellites (32) du premier train épicycloïdal aval (RS1) est relié à la couronne à denture intérieure (43) du deuxième train épicycloïdal aval (RS4) et à l'arbre de sortie (2) (Fig. 11A).

21. Transmission à rapports étagés selon la revendication 17, 18 ou 19, **caractérisée en ce que** l'arbre d'entrée (1) est relié à la roue planétaire (11 a) du premier train épicycloïdal amont (RS1a), **en ce que** les pignons satellites extérieurs (12a") du premier train épicycloïdal amont (RS1a), les pignons satellites (12b) du deuxième train épicycloïdal amont (RS1b), les pignons satellites (22a) du troisième train épicycloïdal amont (RS2a) et les pignons satellites (22b) du quatrième train épicycloïdal amont (RS2a) sont constitués par des satellites étagés, **en ce que** le porte-satellites (15a') des pignons satellites intérieurs (12a') du premier train épicycloïdal amont (RS1a) est relié au porte-satellites (15a") des pignons satellites extérieurs (12a") du premier train épicycloïdal amont (RS1a), au porte-satellites (15b) des pignons satellites (12b) du deuxième train épicycloïdal amont (RS1b), au porte-satellites (25a) des pignons satellites (22a) du troisième train épicycloïdal amont (RS2a) et au porte-satellites (25b) des pignons satellites (22b) du quatrième train épicycloïdal amont (RS2b) et peut être relié, par l'intermédiaire d'un septième élément de commutation (G), à la roue planétaire (41) du deuxième train épicycloïdal aval (RS4), **en ce que** la roue planétaire (11b) du deuxième train épicycloïdal amont (RS1b) est immobilisée, **en ce que** la roue planétaire (41) du deuxième train épicycloïdal aval (RS4) peut être immobilisée par l'intermédiaire d'un troisième élément de commutation (C), **en ce que** la couronne à denture intérieure (23a) du troisième train épicycloïdal amont (RS2a) peut être reliée, par l'intermédiaire d'un huitième élément de commutation (H), à la roue planétaire (41) du deuxième train épicycloïdal aval (RS4), **en ce que** l'arbre d'entrée (1) peut être relié, par l'intermédiaire du premier élément de commutation (A), à la roue planétaire (31) du premier train épicycloïdal aval (RS3), **en ce que** la couronne à denture intérieure (13a) du premier train épicycloïdal amont (RS1a) et la couronne à denture intérieure (13b) du deuxième train épicycloïdal amont (RS1b) sont reliées entre elles et peuvent être reliés par l'intermédiaire d'un deuxième élément de commutation (B), à la roue planétaire (41) du deuxième train épicycloïdal aval (RS4), **en ce que** les porte-satellites (15a', 15a"), reliés entre eux, des pignons satellites extérieurs et intérieurs (12a", 12a') du premier train épicycloïdal amont peuvent être reliés, par l'intermédiaire d'un quatrième élément de commutation (D), au porte-satellites (35') des pignons satellites intérieurs (32') du premier train épicycloïdal aval (RS3), **en ce que** les pignons satellites extérieurs (32") du premier train épicycloïdal aval (RS3) et les pignons satellites (42) du deuxième train épicycloïdal aval (RS4) sont accouplés entre eux, **en ce que** le porte-satellites (35") des pignons satellites extérieurs (32") du premier train épicycloïdal aval (RS3) est relié au porte-satellites (35') des pignons satellites intérieurs (32') du premier train épicycloïdal aval (RS3) et au porte-satellites (45) des pignons satellites (42) du deuxième train épicycloïdal aval (RS4) et peut être relié à l'arbre d'entrée (1) par l'intermédiaire d'un cinquième élément de commutation (E), **en ce que** la roue planétaire (21 b) du quatrième train épicycloïdal amont (RS2b) peut être reliée, par l'intermédiaire d'un sixième élément de commutation (F), à la roue planétaire (41) du deuxième train épicycloïdal aval (RS4), et **en ce que** la couronne à denture intérieure (38) du premier train épicycloïdal aval (RS3) et la couronne à denture intérieure (33) du deuxième train épicycloïdal aval (RS4) est relié en commun à l'arbre de sortie (2) (Fig. 16A).
